# EUROPEAN PATENT APPLICATION

(11) **EP 4 391 602 A1**
(43) Date of publication of application: **26.06.2024**
(21) Application number: 22866696.2
(22) Date of filing: 08.09.2022
(51) Int. Cl.: H04W 4/38, H04W 4/50, H04W 74/08

(54) **METHOD AND APPARATUS FOR ESTABLISHING SENSING CHANNEL, COMMUNICATION DEVICE, STORAGE MEDIUM AND SYSTEM**

(30) Priority: 13.09.2021 CN 202111069514
(71) Applicant: Vivo Mobile Communication Co., Ltd., Dongguan, Guangdong 523863 (CN)
(72) Inventor: LI, Huan, Dongguan, Guangdong 523863 (CN); CHONG, Weiwei, Dongguan, Guangdong 523863 (CN)
(74) Representative: Murgitroyd & Company
(86) International application number: PCT/CN2022/117793
(87) International publication number: WO 2023/036235

(57) **Abstract**

This application discloses a sensing channel establishment method and apparatus, a communication device, a storage medium, and a system. The sensing channel establishment method in embodiments of this application includes: establishing, by a sensing network element, a sensing channel with an access network device; and sending, by the sensing network element, target sensing service configuration information to a sensing device through the sensing channel, where the target sensing service configuration information is used to measure a sensing signal.

## Description

### CROSS-REFERENCE TO RELATED APPLICATION

This application claims priority to Chinese Patent Application No. 202111069514.9, filed in China on September 13, 2021, which is incorporated herein by reference in its entirety.

### TECHNICAL FIELD

This application pertains to the field of communications technologies, and specifically relates to a sensing channel establishment method and apparatus, a communication device, a storage medium, and a system.

### BACKGROUND

Wireless communication and radar sensing (Communication-Sensing, CS) have been developing in parallel, and an intersection between the two is limited. In recent years, the two systems have drawn more attention in terms of coexistence, cooperation, and joint design. If the wireless communication system can also provide a sensing function in addition to data communication transmission, this is equivalent to integrating the wireless communication system and the radar sensing system into one system to greatly reduce hardware deployment costs.

However, an urgent problem to be resolved is how to deploy a wireless network architecture and how to perform a sensing service procedure in the architecture to implement the sensing function in integrated wireless communication and radar sensing (which may also be referred to as integrated communication and sensing).

### SUMMARY

Embodiments of this application provide a sensing channel establishment method and apparatus, a communication device, a storage medium, and a system to resolve a problem of how to deploy a wireless network architecture and how to perform a sensing service procedure in the architecture.

According to a first aspect, a sensing channel establishment method is provided. The sensing channel establishment method includes: establishing, by a sensing network element, a sensing channel with an access network device; and sending, by the sensing network element, target sensing service configuration information to a sensing device through the sensing channel, where the target sensing service configuration information is used to measure a sensing signal.

According to a second aspect, a sensing channel establishment method is provided. The sensing channel establishment method includes: establishing, by an access network device, a sensing channel with a sensing network element; and receiving, by the access network device, target sensing service configuration information from the sensing network element through the sensing channel, where the target sensing service configuration information is used to measure a sensing signal.

According to a third aspect, a sensing channel establishment apparatus is provided. The sensing channel establishment apparatus includes an establishment module and a sending module. The establishment module is configured to establish a sensing channel with an access network device. The sending module is configured to send target sensing service configuration information to a sensing device through the sensing channel established by the establishment module, where the target sensing service configuration information is used to measure a sensing signal.

According to a fourth aspect, a sensing channel establishment apparatus is provided. The sensing channel establishment apparatus includes an establishment module and a receiving module. The establishment module is configured to establish a sensing channel with a sensing network element. The receiving module is configured to receive target sensing service configuration information from the sensing network element through the sensing channel established by the establishment module, where the target sensing service configuration information is used to measure a sensing signal.

According to a fifth aspect, a network element is provided. The network element includes a processor, a memory, and a program or instructions stored in the memory and capable of running on the processor. When the program or instructions are executed by the processor, the steps of the method according to the first aspect are implemented.

According to a sixth aspect, an access network device is provided. The access network device includes a processor, a memory, and a program or instructions stored in the memory and capable of running on the processor. When the program or instructions are executed by the processor, the step of the method according to the second aspect is implemented.

According to a seventh aspect, a network element is provided. The network element includes a processor and a communication interface. The processor is configured to establish a sensing channel with an access network device. The communication interface is configured to send target sensing service configuration information to a sensing device through the sensing channel, where the target sensing service configuration information is used to measure a sensing signal.

According to an eighth aspect, an access network device is provided. The access network device includes a processor and a communication interface. The processor is configured to establish a sensing channel with a sensing network element. The communication interface is configured to receive target sensing service configuration information from the sensing network element through the sensing channel, where the target sensing service configuration information is used to measure a sensing signal.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a chip is provided. The chip includes a processor and a communication interface. The communication interface is coupled to the processor. The processor is configured to run a program or instructions to implement the method according to the first aspect or implement the method according to the second aspect.

According to an eleventh aspect, a computer program or program product is provided. The computer program or program product is stored in a non-transitory storage medium. The program or program product is executed by at least one processor to implement the steps of the sensing channel establishment method according to the first aspect or implement the steps of the sensing channel establishment method according to the second aspect.

In the embodiments of this application, the sensing network element can establish the sensing channel with the access network device and send the target sensing service configuration information to the sensing device through the sensing channel, so that the sensing device can measure the sensing signal. In the solutions, the sensing network element can be deployed, and the sensing channel between the sensing network element and the access network device can be established, so that the sensing network element and the access network device can exchange information related to a sensing service (such as sensing service configuration information) through the sensing channel to implement execution of a sensing service procedure and processing of the sensing service (such as measuring the sensing signal), thereby implementing a sensing function in integrated communication and sensing.

### BRIEF DESCRIPTION OF DRAWINGS

FIG. 1A is a first schematic diagram of an architecture of a wireless communication system according to an embodiment of this application;
FIG. 1B is a second schematic diagram of an architecture of a wireless communication system according to an embodiment of this application;
FIG. 1C is a third schematic diagram of an architecture of a wireless communication system according to an embodiment of this application;
FIG. 2 is a first schematic diagram of a sensing channel establishment method according to an embodiment of this application;
FIG. 3 is a second schematic diagram of a sensing channel establishment method according to an embodiment of this application;
FIG. 4 is a third schematic diagram of a sensing channel establishment method according to an embodiment of this application;
FIG. 5 is a fourth schematic diagram of a sensing channel establishment method according to an embodiment of this application;
FIG. 6 is a fifth schematic diagram of a sensing channel establishment method according to an embodiment of this application;
FIG. 7 is a sixth schematic diagram of a sensing channel establishment method according to an embodiment of this application;
FIG. 8 is a seventh schematic diagram of a sensing channel establishment method according to an embodiment of this application;
FIG. 9 is an eighth schematic diagram of a sensing channel establishment method according to an embodiment of this application;
FIG. 10 is a ninth schematic diagram of a sensing channel establishment method according to an embodiment of this application;
FIG. 11 is a tenth schematic diagram of a sensing channel establishment method according to an embodiment of this application;
FIG. 12 is an eleventh schematic diagram of a sensing channel establishment method according to an embodiment of this application;
FIG. 13 is a twelfth schematic diagram of a sensing channel establishment method according to an embodiment of this application;
FIG. 14 is a first schematic diagram of a structure of a sensing channel establishment apparatus according to an embodiment of this application;
FIG. 15 is a second schematic diagram of a structure of a sensing channel establishment apparatus according to an embodiment of this application;
FIG. 16 is a schematic diagram of a hardware structure of a communication device according to an embodiment of this application; and
FIG. 17 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

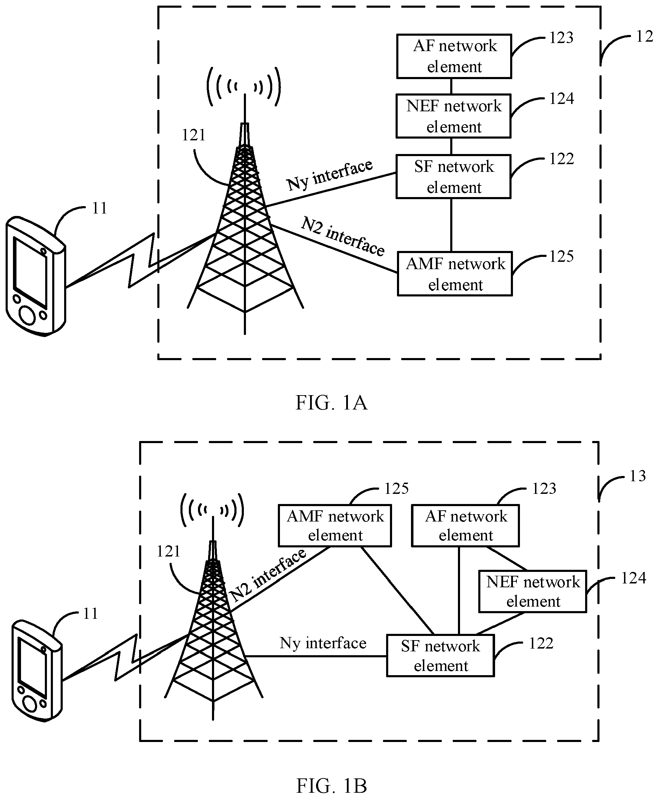

FIG. 1A is a block diagram of a wireless communication system according to an embodiment of this application. The wireless communication system includes a terminal device 11 and a network-side device 12.

The network-side device 12 may include an radio access network (Radio Access Network, RAN) device 121 (such as a base station) and a core network device. The core network device may include a sensing network element (such as a sensing function (Sensing Function, SF) network element 122), an application function (Application Function, AF) network element 123, a network exposure function (Network Exposure Function, NEF) network element 124, and a mobility management network element (such as an access and mobility management function (Access and Mobility Management Function, AMF) network element 125).

The terminal device 11 may be connected to the RAN device 121 through a Uu interface. The RAN device 121 may be connected to the SF network element 122 through an Ny interface (or other interfaces). The RAN device 121 may be connected to the AMF network element 125 through an N2 interface. The AMF network element 125 may be connected to the SF network element 122. The SF network element 122 may be connected to the NEF network element 124. The NEF network element 124 may be connected to the AF network element 123.

In this architecture, the sensing service function network element (that is, the SF network element) is deployed in the network. A point-to-point interface (such as the Ny interface) is disposed between the SF network element and the RAN device. The Ny interface carries sensing task related control signaling and transmission of sensing measurement data.

FIG. 1B is a block diagram of another wireless communication system according to an embodiment of this application. The wireless communication system includes a terminal device 11 and a network-side device 13.

The network-side device 13 may include a RAN device 121 (such as a base station) and a core network device. The core network device may include an SF network element 122, an AF network element 123, a NEF network element 124, and an AMF network element 125.

The terminal device 11 may be connected to the RAN device 121 through a Uu interface. The RAN device 121 may be connected to the SF network element 122 through an Ny interface (or other interfaces). The RAN device 121 may be connected to the AMF network element 125 through an N2 interface. The AMF network element 125 may be connected to the SF network element 122 through an Nx interface (or other interfaces). The SF network element 122 may be connected to the AF network element 123. The SF network element 122 may be connected to the NEF network element 124. The AF network element 123 may be connected to the NEF network element 124.

In this architecture, a sensing service function network element (that is, the SF network element) is deployed in the network. The Nx interface is between the SF network element and the AMF network element. A point-to-point interface (such as the Ny interface) is disposed between the SF network element and the RAN device. The Nx interface carries sensing task related control signaling. The Ny interface carries transmission of sensing measurement data.

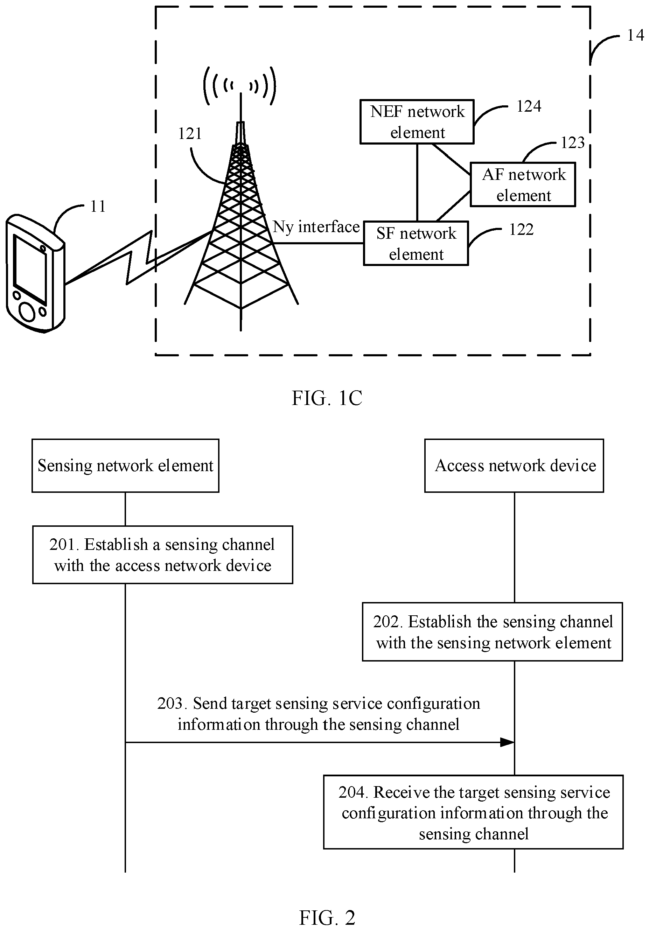

FIG. 1C is a block diagram of another wireless communication system according to an embodiment of this application. The wireless communication system includes a terminal device 11 and a network-side device 14.

The network-side device 14 may include a RAN device 121 (such as a base station) and a core network device. The core network device may include an SF network element 122, an AF network element 123, and a NEF network element 124.

The terminal device 11 may be connected to the RAN device 121 through a Uu interface. The RAN device 121 may be connected to the SF network element 122 through an Ny interface (or other interfaces). The SF network element 122 may be connected to the AF network element 123. The SF network element 122 may be connected to the NEF network element 124. The AF network element 123 may be connected to the NEF network element 124.

In this architecture, a sensing service function network element (that is, the SF network element) is deployed in the network. A point-to-point interface (such as the Ny interface) is disposed between the SF network element and the RAN device. The Ny interface is divided into a control plane and a user plane. The Ny control plane carries sensing task related control signaling (for example, sensing configuration information). The Ny user plane carries transmission of sensing measurement data (for example, a sensing measurement report).

Optionally, in each of the foregoing architectures in the embodiments of this application, an N51 interface may also exist between the AMF network element 125 and the NEF network element 124.

It should be noted that in the embodiments of this application, the SF network element is deployed in the network, and an interface (for example, the Ny interface) is established between the SF network element and the RAN device, and an interface (for example, the Nx interface) is established between the SF network element and the AMF network element.

In each of the foregoing architectures, a channel between the terminal device and the RAN device may further include the following cases: The control plane transmits sensing configuration information and a sensing measurement report; the control plane transmits sensing configuration information, and the user plane transmits a sensing measurement report; and the user plane transmits sensing configuration information and a sensing measurement report.

The terminal device 11 may also be referred to as a terminal or user equipment (User Equipment, UE). The terminal device 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicular user equipment (VUE), or a pedestrian equipment (PUE). The wearable device includes a smartwatch, a smart band, a headphone, glasses, or the like. It should be noted that a specific type of the terminal device 11 is not limited in the embodiments of this application.

The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

The following describes some concepts and/or terms related to a sensing channel establishment method and apparatus, a communication device, a storage medium, and a system provided in the embodiments of this application.

Integrated integrated sensing and communication:

Wireless communication and radar sensing have many commonalities in signal processing algorithms, devices, and system architectures to some extent. Extensive early research on coexistence of communication and radar systems focuses on development of effective interference management technologies to enable two separately deployed systems to run smoothly without interfering with each other. Although radar and communication systems may be co-located or even physically integrated, they transmit two different signals in time/frequency domain. They cooperate to share same resources to minimize interference with each other while working simultaneously. Corresponding measures include beamforming, cooperative spectrum sharing, primary and secondary spectrum sharing, dynamic coexistence, and the like.

However, effective interference cancellation usually has strict requirements on node mobility and information exchange between nodes. Therefore, an improvement of spectrum efficiency is actually limited. Because interference in the coexisting systems is caused by transmitting two independent signals, there is a question of whether one transmitted signal can be used for both communication and radar sensing. The radar system usually uses specially designed waveforms, such as short pulses and chirps, which can implement high-power radiation and simplified receiver processing. However, these waveforms are not necessary for radar detection. For example, a passive radar or passive sensing uses different radio signals as sensing signals.

Machine learning, and in particular, a deep learning technology, further promote use of non-dedicated radio signals for radar sensing. Based on these technologies, conventional radars are developing toward more universal wireless sensing. Wireless sensing herein may broadly refer to retrieving information from a received radio signal, rather than modulating communication data into a signal at a transmitter. For wireless sensing related to a location of a sensing target, common signal processing methods can be used to estimate a target signal reflection delay, an angle-of-arrival (Angle-of-Arrival, AoA), an angle-of-departure (Angle-of-Departure, AoD), a Doppler parameter, and other dynamic parameters. Physical characteristics of the sensing target can be implemented by measuring a device, an object, and an inherent pattern signal. The two sensing manners may be referred to as sensing parameter estimation and pattern recognition respectively. In this sense, wireless sensing refers to more general sensing technologies and applications that use radio signals.

By using integrated sensing and communication (Integrated Sensing and Communication, ISAC) technology, it is potential to integrate wireless sensing into large-scale mobile networks, which may be referred to as perceptive mobile networks (Perceptive Mobile Networks, PMNs). The PMN may evolve from a current 5G mobile network and is expected to become a ubiquitous wireless sensor network while providing stable and high-quality mobile communication services. The PMN may be built on an existing mobile network infrastructure, and there is no need to make great changes to the network structure and devices. The PMN will exploit maximum capabilities of the mobile network and avoid high infrastructure costs for separately constructing a new wide-area wireless sensor network. As coverage expands, integrated communication and sensing capabilities are expected to implement many new applications. The perceptive mobile network can provide both communication and wireless sensing services, and will probably become a ubiquitous wireless sensing solution due to its large broadband coverage and strong infrastructure. Its jointly coordinated communication and sensing capabilities will increase productivity of our society and help produce plenty of new applications that cannot be effectively implemented by the existing sensor network, for example, traffic monitoring, weather forecasting, and rainfall remote sensing based on GSM radio signals. The perceptive mobile network can be widely used in communication and sensing in the fields of transportation, communications, energy, precision agriculture, and security. The perceptive mobile network can also provide complementary sensing capabilities for the existing sensor network, have unique day and night operation capabilities, and can penetrate fog, leaves, or even solid objects.

A sensing channel establishment method provided in the embodiments of this application is hereinafter described in detail by using specific embodiments and application scenarios thereof with reference to the accompanying drawings.

An embodiment of this application provides a sensing channel establishment method. FIG. 2 is a flowchart of a sensing channel establishment method according to an embodiment of this application. As shown in FIG. 2, the sensing channel establishment method provided in this embodiment of this application may include the following step 201 to step 204.

Step 201: A sensing network element establishes a sensing channel with an access network device.

It should be noted that the sensing network element in this embodiment of this application may be a sensing service function network element deployed in a network architecture, or may be co-located with other network elements such as an AMF network element or an SMF network element, to exchange related data of a sensing service with other devices (such as an access network (RAN) device), to implement execution of a sensing service procedure in the network architecture. A sensing channel (that is, an Ny channel) is a channel between an SF network element and the RAN device.

Optionally, in this embodiment of this application, a process of establishing a sensing channel between the SF network element and the RAN device may be implemented in the following manners:

First manner: establishing a channel at a network-side device granularity between the RAN device and the SF network element, where a sensing channel may be established when the device is online.

It should be noted that the channel at the network-side device granularity may be understood as a channel between the sensing network element and the access network device that is established in a case that a sensing device includes the access network device, where the channel is used by the sensing network element and the access network device to perform data exchange and does not involve a terminal device side, that is, the channel does not involve data exchange between the sensing network element and a terminal device through the channel between the sensing network element and the access network device.

Second manner: establishing a channel at a terminal device granularity between the RAN and the SF network element.

It should be noted that the channel at the terminal device granularity may be understood as a channel between the sensing network element and the access network device that is established in a case that a sensing device includes a sensing terminal device and the access network device, where the channel is used by the sensing network element and the access network device to perform data exchange and used by the sensing network element and the sensing terminal device to perform data exchange through the access network device.

For example, the SF network element triggers a process of establishing a sensing channel at the terminal device granularity between the SF network element and the RAN device. Optionally, after the SF network element determines the sensing device that participates in sensing signal measurement, if the sensing device includes the sensing terminal device, the SF network element may trigger the process of establishing the sensing channel at the terminal device granularity.

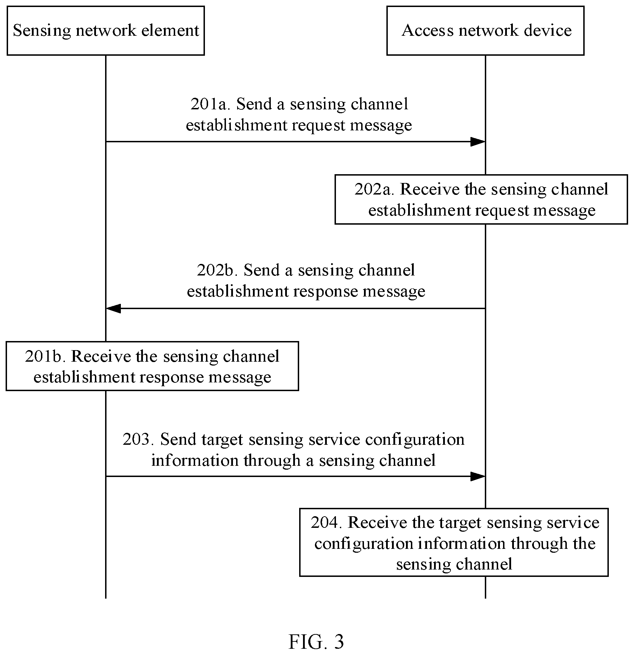

Optionally, in this embodiment of this application, the sensing device includes the sensing terminal device. With reference to FIG. 2, as shown in FIG. 3, the foregoing step 201 may be specifically implemented by the following step 201a and step 201b.

Step 201a: The sensing network element sends a sensing channel establishment request message to the access network device.

In this embodiment of this application, the sensing channel establishment request message includes identification information of the sensing terminal device on a first interface, and the first interface is an interface between the access network device and a mobility management network element.

In this embodiment of this application, the sensing network element may send the identification information of the sensing terminal device on the first interface to the access network device, to indicate the identification information for identifying the terminal device on the first interface to the access network device, so that the access network device can identify the terminal device on the first interface, to accurately determine the sensing terminal device.

For example, in this embodiment of this application, the sensing channel establishment request message may be a sensing channel application protocol (NyAP) establishment request message; and the first interface may be an N2 interface (that is, an interface between the RAN device and the AMF network element), and the identification information of the sensing terminal device on the first interface may be used by the RAN device to identify the terminal device on the N2 interface to determine the sensing terminal device.

Optionally, in this embodiment of this application, the sensing channel establishment request message further includes sensing channel endpoint identification information (for example, SF Ny tunnel info) of the sensing network element.

In this embodiment of this application, the sensing network element may send the sensing channel endpoint identification information of the sensing network element to the access network device to indicate the sensing channel endpoint identification information to the access network device, so that the access network device accurately and quickly establishes a channel with the sensing network element.

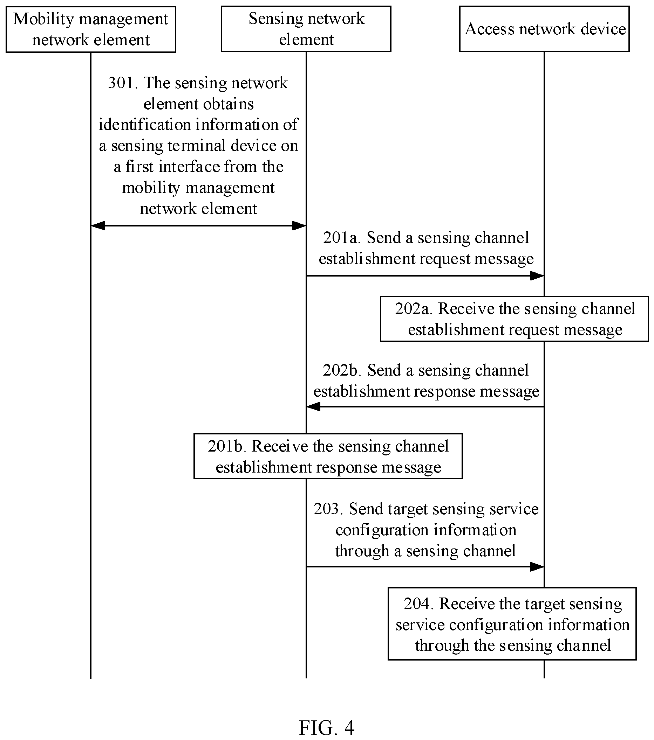

Optionally, in this embodiment of this application, with reference to FIG. 3, as shown in FIG. 4, before the foregoing step 201a, the sensing channel establishment method provided in this embodiment of this application further includes the following step 301.

Step 301: The sensing network element obtains the identification information of the sensing terminal device on the first interface from the mobility management network element.

Step 201b: The sensing network element receives a sensing channel establishment response message from the access network device.

In this embodiment of this application, the sensing channel establishment response message includes target identification information, the target identification information includes identification information for identifying the terminal device on a sensing interface, and the sensing interface is an interface between the access network device and the sensing network element.

In this embodiment of this application, the access network device may send the identification information for identifying the terminal device on the sensing interface to the sensing network element, to indicate the identification information that can be used for identifying the terminal device on the sensing interface to the sensing network element, so that the sensing network element can accurately determine the sensing terminal device, thereby implementing accurate establishment of the channel at the terminal device granularity.

Optionally, in this embodiment of this application, the sensing channel establishment response message may be a sensing channel application protocol (NyAP) establishment response message; and the sensing interface may be an Ny interface (that is, an interface between the RAN device and the SF network element).

Optionally, in this embodiment of this application, the sensing interface may be a physical interface, or may be a logical interface; and the sensing interface may be used to directly connect the access network device to the sensing network element, or may be used to connect the access network device to the sensing network element through another network element.

Optionally, in this embodiment of this application, the target identification information further includes at least one of the following: the identification information of the sensing terminal device on the first interface, sensing channel application protocol identification information (that is, an SF NyAP ID) of the sensing network element, and sensing channel application protocol identification information (that is, a RAN NyAP ID) of the access network device, where the sensing channel application protocol identification information of the sensing network element is used to uniquely identify the sensing terminal device in the sensing network element, and the sensing channel application protocol identification information of the access network device is used to uniquely identify the sensing terminal device in the access network device.

Optionally, in this embodiment of this application, the sensing channel application protocol identification information of the sensing network element and the sensing channel application protocol identification information of the access network device are the same or different.

It should be noted that, in a case that the SF NyAP ID and the RAN NyAP ID are the same, only one of the two may appear in the sensing channel establishment response message.

Optionally, in this embodiment of this application, identification information for identifying the terminal device on the first interface by the access network device and the sensing channel application protocol identification information of the sensing network element are the same or different.

It should be noted that, in a case that the identification information for identifying the terminal device on the first interface by the access network device and the SF NyAP ID are the same, only one of the two may appear in the sensing channel establishment response message.

Optionally, in this embodiment of this application, the sensing channel establishment response message further includes sensing channel endpoint identification information (that is, RAN Ny tunnel info) of the access network device.

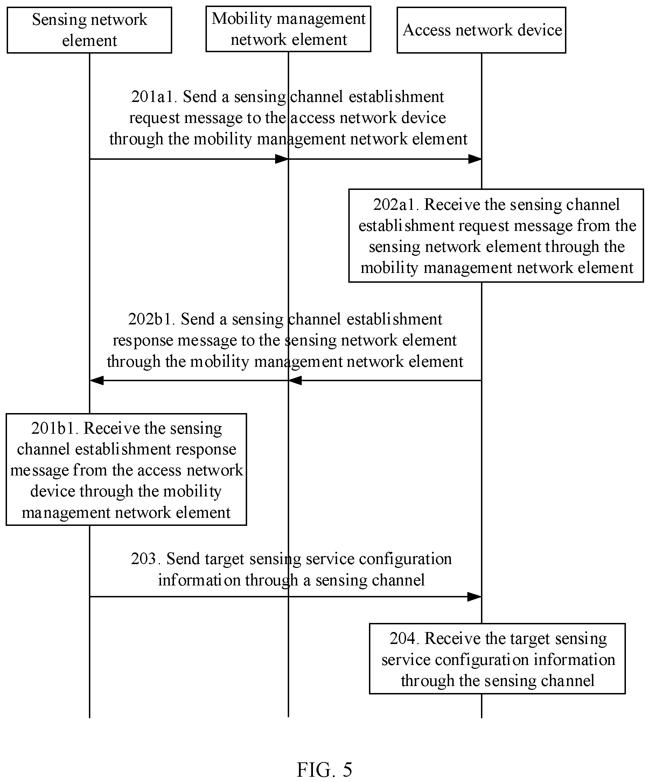

Optionally, in this embodiment of this application, the sensing network element may establish a sensing channel at the terminal device granularity with the access network device through the mobility management network element. With reference to FIG. 3, as shown in FIG. 5, the foregoing step 201a may be specifically implemented by the following step 201a1, and the foregoing step 201b may be specifically implemented by the following step 201b1.

Step 201a1: The sensing network element sends the sensing channel establishment request message to the access network device through the mobility management network element.

It may be understood that the sensing network element may send the sensing channel establishment request message to the mobility management network element, so that the mobility management network element sends the sensing channel establishment request message to the access network device.

Step 201b1: The sensing network element receives the sensing channel establishment response message from the access network device through the mobility management network element.

It may be understood that the access network device may send the sensing channel establishment response message to the mobility management network element, so that the mobility management network element sends the sensing channel establishment response message to the sensing network element.

Step 202: The access network device establishes the sensing channel with the sensing network element.

Optionally, in this embodiment of this application, with reference to FIG. 2, as shown in FIG. 3, the foregoing step 202 may be specifically implemented by the following steps 202a and 202b.

Step 202a: The access network device receives the sensing channel establishment request message from the sensing network element.

In this embodiment of this application, the sensing channel establishment request message includes the identification information of the sensing terminal device on the first interface.

Step 202b: The access network device sends the sensing channel establishment response message to the sensing network element.

In this embodiment of this application, the sensing channel establishment response message includes the target identification information.

It should be noted that an execution order of step 201a, step 201b, step 202a, and step 202b is: step 201a, then step 202a, then step 202b, and finally step 201b.

Optionally, in this embodiment of this application, with reference to FIG. 3, as shown in FIG. 5, the foregoing step 202a may be specifically implemented by the following step 202a1, and the foregoing step 202b may be specifically implemented by the following step 202b 1.

Step 202a1: The access network device receives the sensing channel establishment request message from the sensing network element through the mobility management network element.

Step 202b1: The access network device sends the sensing channel establishment response message to the sensing network element through the mobility management network element.

It should be noted that, for a specific procedure for establishing a sensing channel, reference may be made to the description of the following embodiments (such as Embodiment 1 to Embodiment 3). Details are not described herein again.

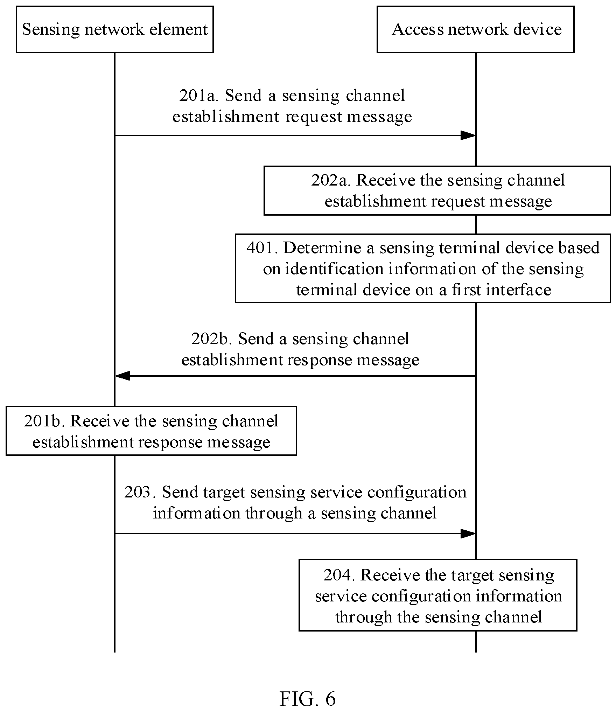

Optionally, in this embodiment of this application, with reference to FIG. 3, as shown in FIG. 6, after the foregoing step 202a, the sensing channel establishment method provided in this embodiment of this application further includes the following step 401.

Step 401: The access network device determines the sensing terminal device based on the identification information of the sensing terminal device on the first interface.

Step 203: The sensing network element sends target sensing service configuration information to the sensing device through the sensing channel.

In this embodiment of this application, the target sensing service configuration information is used to measure a sensing signal.

Optionally, in this embodiment of this application, in the foregoing first manner, in the case that the sensing device includes an access network device, the sensing network element may deliver sensing service configuration information to the access network device through the channel at the network-side device granularity. The access network device reports measurement data to the sensing network element through the channel at the network-side device granularity. The sensing network element does not need to deliver the sensing service configuration information to the sensing terminal device, or does not need to deliver a sensing configuration to the sensing terminal device through the access network device.

Optionally, in this embodiment of this application, in the foregoing first manner, in the case that the sensing device includes the sensing terminal device, when the sensing network element and the access network device exchange sensing service configuration information, identification information for identifying the terminal device on the Ny interface may be carried.

For example, Ny messages sent by the SF network element to the RAN device all carry the identification information for identifying the terminal device on the N2 interface. Ny messages sent by the RAN device to the SF network element all carry the identification information for identifying the terminal device on the N2 interface. It may be understood herein that the identification information for identifying the terminal device on the Ny interface is the same as the identification information for identifying the terminal device on the N2 interface, and the RAN device can determine the sensing terminal device by using the identification information.

Optionally, in this embodiment of this application, after the sensing channel at the terminal device granularity between the access network device and the sensing network element is established, all messages or data exchanged between the access network device and the sensing network element for the sensing terminal device needs to carry the identification information of the sensing terminal device on the sensing channel, for example, at least one of the sensing channel application protocol identification information (that is, the SF NyAP ID) of the sensing network element, the sensing channel application protocol identification information (that is, the RAN NyAP ID) of the access network device, the sensing channel endpoint identification information (that is, the RAN Ny tunnel info) of the access network device, and the sensing channel endpoint identification information (for example, the SF Ny tunnel info) of the sensing network element.

Optionally, in this embodiment of this application, the sensing device includes the sensing terminal device. The sensing network element may send the target sensing service configuration information to the access network device through the sensing channel.

In this embodiment of this application, the target sensing service configuration information includes the target identification information, and the target identification information includes the identification information for identifying the terminal device on the sensing interface.

Optionally, in this embodiment of this application, data packet encapsulation of the target sensing service configuration information includes the sensing channel endpoint identification information of the access network device.

Step 204: The access network device receives the target sensing service configuration information from the sensing network element through the sensing channel.

In an implementation, the sensing device includes the access network device. The access network device sends and receives a sensing signal by itself, or the access network device receives an uplink sensing signal sent by the terminal device and measures the sensing signal based on the target sensing service configuration information to obtain corresponding sensing measurement data.

In another implementation, the sensing device includes the sensing terminal device. The sensing terminal device sends and receives a sensing signal by itself, or receives a downlink sensing signal sent by the access network device and measures the sensing signal based on the target sensing service configuration information to obtain corresponding sensing measurement data.

In the sensing channel establishment method provided in this embodiment of this application, the sensing network element can establish the sensing channel with the access network device and send the target sensing service configuration information to the sensing device through the sensing channel, so that the sensing device can measure the sensing signal. In this solution, the sensing network element can be deployed, and the sensing channel between the sensing network element and the access network device can be established, so that the sensing network element and the access network device can exchange information related to the sensing service (such as the sensing service configuration information) through the sensing channel to implement execution of a sensing service procedure and processing of the sensing service (such as measuring the sensing signal), thereby implementing a sensing function in integrated communication and sensing.

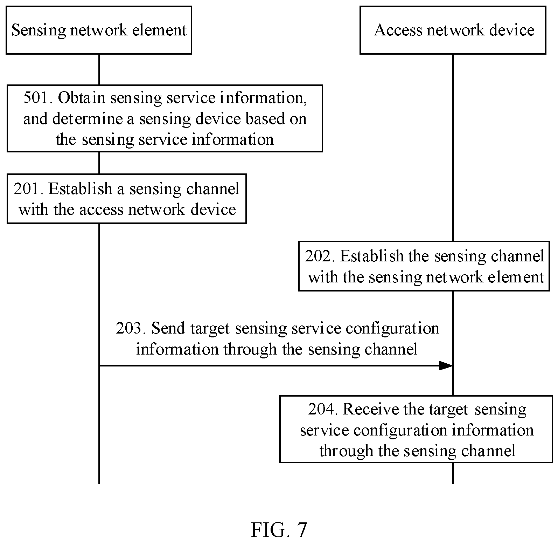

Optionally, in this embodiment of this application, with reference to FIG. 2, as shown in FIG. 7, before the foregoing step 201, the sensing channel establishment method provided in this embodiment of this application further includes the following step 501.

Step 501: The sensing network element obtains sensing service information, and determines the sensing device based on the sensing service information.

In this embodiment of this application, the sensing device is a device having a sensing capability in a sensing area.

Optionally, in this embodiment of this application, the sensing network element may receive a sensing service request message from the AF network element, where the sensing service request message includes the sensing service information.

Optionally, in this embodiment of this application, the sensing network element may receive a sensing service request message from the terminal device, where the sensing service request message includes the sensing service information.

Optionally, in this embodiment of this application, the sensing network element may receive a sensing service request message sent by the terminal device through the mobility management network element, where the sensing service request message includes the sensing service information.

In this embodiment of this application, the sensing network element may determine, from the sensing area based on the sensing service information, that is, a related description of the sensing service, a service object of the sensing service and/or a service range of the sensing service, and the like, the sensing terminal device required by the sensing service.

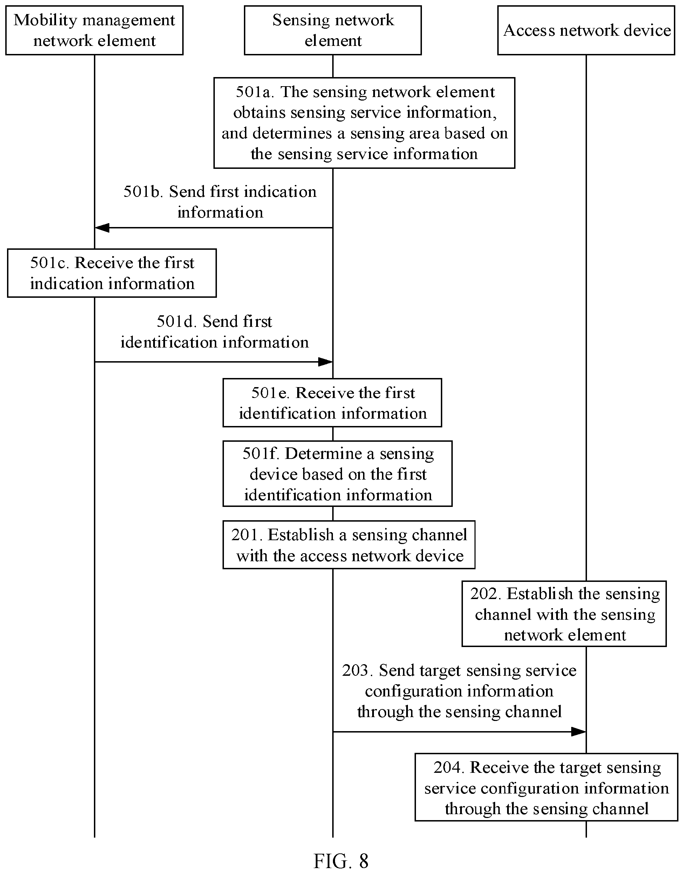

Optionally, in this embodiment of this application, with reference to FIG. 7, as shown in FIG. 8, the foregoing step 501 may be specifically implemented by the following step 501a to step 501f.

Step 501a: The sensing network element obtains the sensing service information, and determines the sensing area based on the sensing service information.

Optionally, in this embodiment of this application, the sensing network element may determine the sensing area based on the service range of the sensing service in the sensing service information, or the sensing network element may determine the sensing area based on service object identification information in the sensing service information.

Step 501b: The sensing network element sends first indication information to the mobility management network element.

In this embodiment of this application, the first indication information is used to indicate the sensing area.

Step 501c: The mobility management network element receives the first indication information from the sensing network element.

Step 501d: The mobility management network element sends first identification information to the sensing network element.

Step 501e: The sensing network element receives the first identification information from the mobility management network element.

In this embodiment of this application, the first identification information is used to indicate the terminal device or the access network device located in the sensing area.

Step 501f: The sensing network element determines the sensing device based on the first identification information.

Optionally, in this embodiment of this application, the sensing service information includes at least one of the following: description information of the sensing service, a service object identifier of the sensing service, and service range information of the sensing service.

It should be noted that the service range information of the sensing service is used to indicate a service range (that is, the service range indicated by the service range information of the sensing service) within which the service object (such as a consumer (consumer) terminal device) of the sensing service performs the sensing service, where the service range may be a relative location range (for example, within 20 meters) or an absolute location range (for example, square A).

Optionally, in this embodiment of this application, the service range information of the sensing service may include at least one of the following: a tracking area identity (Tracking Area Identity, TAI), a cell identity, and an area identity. For example, when a granularity of the sensing service is the TAI, it indicates that the sensing service is performed within a range indicated by the TAI; or when a granularity of the sensing service is the area identity, it indicates that the sensing service is performed within a range indicated by the area identity.

It should be noted that when the service range information of the sensing service includes a plurality of identities among the TAI, the cell identity, and the area identity, the ranges indicated by the plurality of identities may be consistent or inconsistent. Range inconsistency indicates that the sensing service is performed within a union of the ranges indicated by the plurality of identities.

Optionally, in this embodiment of this application, the description information of the sensing service includes at least one of the following: a sensing service type, a sensing service purpose, a sensing service granularity, a sensing service time, sensing data reporting information, and a quality of service requirement of the sensing service.

The service object identifier is used to indicate the terminal device that triggers the sensing service; and the service range information is used to indicate a range within which the service object of the sensing service performs the sensing service.

It should be noted that the sensing service type defines the type of the sensing service and may be defined based on a sensing physical range and a real-time requirement. For example, type I (Type I): large sensing range and high real-time requirement (Delay Critical LSS); type II (Type II): large sensing range and low real-time requirement (LSS); type III (Type III): small sensing range and low real-time requirement (Delay Critical SSS); and type IV (Type IV): small sensing range and low real-time requirement (SSS).

The sensing service purpose is an event to which the sensing service is applied. For example, the sensing service is used for monitoring respiration or monitoring a surrounding traffic environment.

The sensing service granularity (for example, per terminal device or per area) indicates that sensing measurement and reporting are performed based on the terminal device granularity or area granularity.

The sensing service time defines time information for performing the sensing service, and may be absolute time information (for example, 13:00 to 19:00, Monday) or relative time information (for example, within a next month). The time information may include a start time, an end time and/or duration, and the like.

The sensing data reporting information (reporting information) is used to define a sensing data reporting condition, a reporting format, the number of reporting times, and the like. For example, the reporting condition is event triggering or periodic triggering. If the reporting condition is event triggering, the reporting condition further includes event description information (for example, determining that a user has entered a driving state); or if the reporting condition is periodic triggering, the reporting condition further includes reporting period information (for example, reporting every five minutes). In addition, the reporting format is used to indicate a form in which the sensing data is reported, for example, indicate whether to report the sensing data in a binary or text form. The number of reporting times is used to indicate one-time reporting or multiple-time reporting, and the number of times in a case of multiple-time reporting.

Optionally, in this embodiment of this application, the quality of service (Quality of Service, QoS) of the sensing service may be at least one of the following quality parameters: sensing priority level (Sensing Priority Level), sensing delay budget (Sensing Delay Budget, SDB), sensing resolution (Sensing Resolution, SR), maximum sensing range (Maximum Sensing Range, MSR), sensing error (Sensing Error, SE), continuous sensing capacity (Continuous Sensing Capacity, CSC), sensing update rate (Sensing Update Rate), sensing signal quality (Sensing Signal Quality), sensing security (Sensing Security), sensing privacy (Sensing Privacy), detection probability, and false alarm probability.

The sensing priority level is used to determine a resource scheduling priority of a sensing QoS flow. The sensing priority level is used to distinguish each sensing QoS flow of a terminal device, and also used to distinguish sensing QoS flows of different terminal devices. The smaller the value of the sensing priority level, the higher the priority.

The sensing delay budget defines a maximum sensing delay of the sensing service and is used to quantitatively describe the real-time requirement of the sensing service. A value of the sensing delay budget is generally in units of milliseconds (ms). The smaller the value, the higher the sensing real-time requirement.

The sensing resolution defines a resolution of the sensing service, and is related to a network hardware device and a specific resource configuration. Different sensing services involve different resource configurations. For example, a distance resolution is related to a configured sensing signal bandwidth, and an angular resolution is related to an antenna aperture of a base station or a terminal. Different sensing services have different sensing resolutions.

The maximum sensing range defines a maximum measurement range of sensing measurement quantities supported by the sensing service. Different sensing services have different maximum sensing limits.

The sensing error defines sensing performance of the sensing service, that is, sensing accuracy, and is related to the network hardware device, the specific resource configuration, and a signal to noise ratio (Signal to Noise Ratio, SNR). The sensing error may be defined by any one of the following: a maximum error, a percentage of the maximum error to a true value (relative maximum error), and relative error distribution. There is a difference between the sensing error and the sensing resolution. The sensing error defines a maximum deviation between the true value of sensing and an actual sensing result that the service can tolerate, and the sensing resolution defines sensing accuracy requirements of different sensing services.

The continuous sensing capacity defines a capability of supporting continuous sensing by the sensing service, and may be classified into single sensing and continuous sensing (such as target tracking and scanning imaging). The continuous sensing capacity may not be applicable to some sensing services.

The sensing update rate defines a rate of updating sensing processing results of a service that requires continuous sensing. The sensing update rate is applicable to a sensing service that requires continuous sensing.

The sensing signal quality defines sensing signal quality required by the sensing service. Different sensing services have different requirements.

The sensing security defines requirements of different sensing services on security and is divided into three levels. Subsequently, the three levels may be expanded to more than three levels based on a new service or service security level refinement.

The sensing privacy defines requirements of different sensing services on privacy and is divided into three levels. Subsequently, the three levels may be expanded to more than three levels based on a new service or service privacy level refinement.

The detection probability is defined as a capability of determining presence or absence of the sensing target, and a probability of determining presence of the sensing target assuming that the target exists. The detection probability is applicable to some services, such as a radar sensing service.

The false alarm probability is defined as a capability of determining presence or absence of the sensing target, and a probability of determining presence of the sensing target assuming that the target does not exist. The false alarm probability is applicable to some services, such as the radar sensing service.

Optionally, in this embodiment of this application, the sensing resolution may include at least one of the following: a distance resolution, a speed resolution, an angular resolution, an imaging resolution, a temperature resolution, an air pressure resolution, a humidity resolution, and the like.

Optionally, in this embodiment of this application, the maximum sensing range may include at least one of the following: a maximum sensing distance, a maximum sensing speed, a maximum sensing angle, a maximum sensing temperature, maximum sensing pressure, maximum sensing humidity, and the like.

Optionally, in this embodiment of this application, the sensing update rate may include at least one of the following: a distance update rate, a speed update rate, an angle update rate, an imaging update rate, a temperature update rate, an air pressure update rate, a humidity update rate, and the like.

Optionally, in this embodiment of this application, the sensing signal quality may include at least one of the following: received signal strength of the sensing signal, a signal to noise ratio, a signal to interference plus noise ratio, a signal to clutter ratio, a signal side lobe characteristic, and a peak to average power ratio (Peak to Average Power Ratio, PAPR).

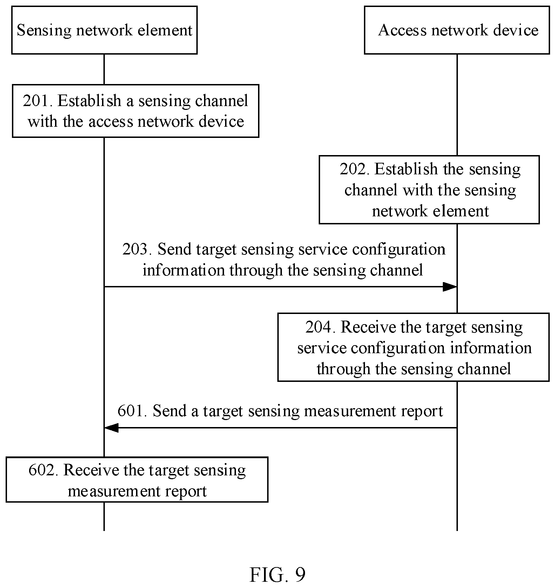

Optionally, in this embodiment of this application, with reference to FIG. 2, as shown in FIG. 9, after the foregoing step 204, the sensing channel establishment method provided in this embodiment of this application further includes the following step 601 and step 602.

Step 601: The access network device sends a target sensing measurement report to the sensing network element.

In this embodiment of this application, the target sensing measurement report includes at least one of the following: a sensing measurement report of the access network device and a sensing measurement report of the sensing terminal device, where the sensing measurement report of the sensing terminal device includes the target identification information, and the target identification information includes the identification information for identifying the terminal device on the sensing interface.

Optionally, in this embodiment of this application, data packet encapsulation of the target sensing measurement report includes the sensing channel endpoint identification information of the sensing network element.

Step 602: The sensing network element receives the target sensing measurement report from the access network device.

In this embodiment of this application, the access network device may send the target sensing measurement report to the sensing network element, so that the sensing network element can obtain a result of measuring the sensing signal by the access network device and/or a result of measuring the sensing signal by the sensing terminal device.

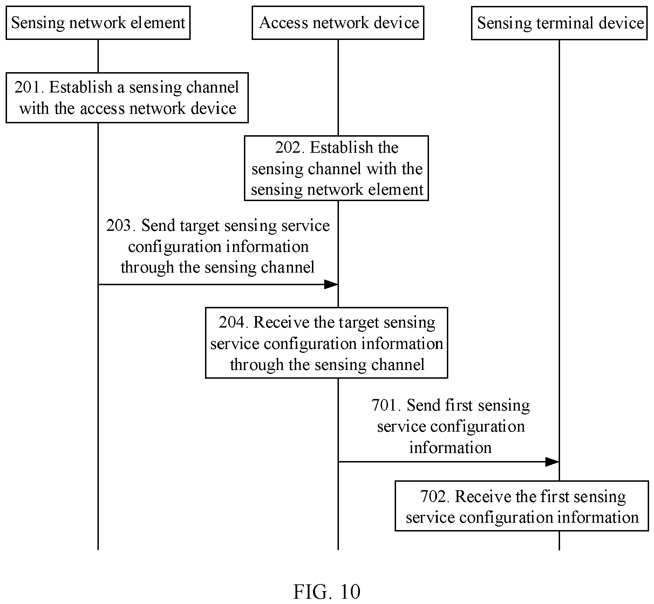

Optionally, in this embodiment of this application, with reference to FIG. 2, as shown in FIG. 10, after the foregoing step 204, the sensing channel establishment method provided in this embodiment of this application further includes the following step 701 and step 702.

Step 701: The access network device sends first sensing service configuration information to the sensing terminal device.

In this embodiment of this application, the first sensing service configuration information and the target sensing service configuration information are the same or different.

Optionally, in this embodiment of this application, the first sensing service configuration information may be derived or converted from the target sensing service configuration information, or more items of sensing service configuration information are obtained based on the target sensing service configuration information.

Step 702: The sensing terminal device receives the first sensing service configuration information from the access network device.

In this embodiment of this application, in the case that the sensing device includes the sensing terminal device, after receiving the target sensing service configuration information sent by the sensing network element, the access network device can directly send the target sensing measurement report to the sensing terminal device, or process the target sensing service configuration information and then send the processed target sensing service configuration information to the sensing terminal device, so that the sensing terminal device can obtain corresponding sensing service configuration information.

The sensing channel establishment method provided in the embodiments of this application is hereinafter described by using specific embodiments.

### Embodiment 1

Applicable architecture: An SF network element is deployed in a network, and a point-to-point interface (such as an Ny interface) is disposed between the SF network element and a RAN device. The Ny interface carries sensing task related control signaling and transmission of sensing measurement data.

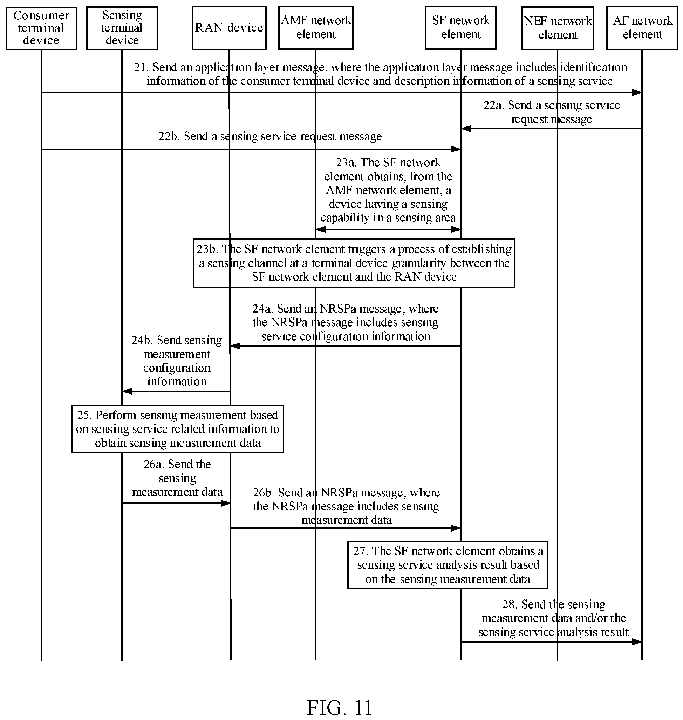

With reference to FIG. 1A, as shown in FIG. 11, this embodiment of this application provides a sensing channel establishment method.

Step 21: A consumer terminal device sends an application layer message to an AF network element, where the application layer message includes identification information of the consumer terminal device and description information of a sensing service.

In this embodiment of this application, the consumer (consumer) terminal device performs application-layer exchange with the AF network element to exchange sensing task information or sensing service information.

Optionally, in this embodiment of this application, the consumer terminal device may further send service range information of the sensing service to the AF network element, so that the AF network element can learn that the consumer terminal device requests to perform the sensing service corresponding to the description information of the sensing service.

Step 22a: The AF network element sends a sensing service request message to an SF network element.

The sensing service request message carries the description information of the sensing service.

Optionally, in this embodiment of this application, the AF network element may send the sensing service request message to the SF network element through a NEF network element.

If the AF network element receives the description information of the sensing service in step 21, the description information of the sensing service in step 22a is the same as or different from the description information of the sensing service in step 21. For example, the description information of the sensing service in step 22a may be derived or converted from the description information of the sensing service in step 21, or more items of the description information of the sensing service may be obtained based on the description information of the sensing service in step 21.

Optionally, in this embodiment of this application, the sensing service request message may further include service object identification information of the sensing service, such as identification information of the consumer terminal device, used to indicate an identity of user equipment that triggers the sensing service, or indicate a user identity corresponding to a service object of the sensing service.

Optionally, in this embodiment of this application, if the AF network element has determined which sensing device(s) (for example, including a sensing terminal device or a sensing access network device) is/are used for a service object (for example, the consumer terminal device), the sensing service request message may also include identification information of the sensing device (for example, identification information of the sensing terminal device or identification information of the sensing access network device).

Optionally, in this embodiment of this application, the AF network element may send the sensing service request message to the SF network element through the NEF network element. It should be noted that if the AF network element is a trusted AF network element of an operator, the AF network element may send the sensing service request message without using the NEF network element.

Step 22b: The consumer terminal device sends a sensing service request message to the SF network element.

It may be understood that the consumer terminal device may also directly send the sensing service request message to the SF network element.

In an implementation, the consumer terminal device may send the sensing service request message to an AMF network element by using a NAS message, and then the AMF network element forwards the sensing service request to the SF network element. This manner may appear, without limitation, in the following scenario: A plurality of SF network elements are deployed in the network, and the AMF network element needs to select a suitable SF network element from the plurality of SF network elements based on information such as a location of the consumer terminal device and a sensing service type.

In another implementation, the consumer terminal device may directly send the sensing service request message to the SF network element. This manner may appear, without limitation, in the following scenario: One or fewer SF network elements are deployed in the network.

It should be noted that step 21 is a manner of obtaining a sensing service request by the SF network element, and step 22a and step 22b are another manner of obtaining a sensing service request by the SF network element; and only one of the two manners may appear. Certainly, the SF network element can also obtain the sensing service request in other manners. This is not limited by in this embodiment of this application.

Step 23a: The SF network element obtains, from the AMF network element, a device having a sensing capability in a sensing area.

In this embodiment of this application, the AMF network element may select a sensing device based on area information in the received description information of the sensing service.

The SF network element may determine the sensing area based on the received sensing service information. For example, the SF network element determines the sensing area based on a service range of the sensing service in the sensing service information; or the SF network element determines the sensing area based on the service object identification information in the sensing service information.

For example, the SF network element sends an event exposure service request message to the AMF network element, where the event exposure service request message includes indication information of the sensing area (that is, used to indicate the sensing area).

The SF network element receives an event exposure service response message from the AMF network element, where the event exposure service response message includes identification information of a sensing device located in the sensing area. Alternatively, the SF network element receives an event exposure service response message from the AMF network element, where the event exposure service response message includes identification information of a sensing device that can provide sensing signal measurement in the sensing area. Alternatively, the SF network element receives an event exposure service response message from the AMF network element, where the event exposure service response message includes identification information of a terminal device and/or a RAN device located in the sensing area, and the SF network element determines, based on stored sensing capability information of the terminal device and/or the RAN device, a sensing device participating in sensing signal measurement.

The SF network element may determine, based on the received sensing service information, the sensing device participating in sensing signal measurement. The sensing device may include a sensing terminal device and a RAN device serving the sensing terminal device, and/or a sensing RAN device.

The identification information of the sensing device in the event exposure service response message may include at least one of the following: identification information of the sensing terminal device and identification information of the sensing RAN device. The identification information of the sensing terminal device includes identification information used to identify the terminal device on an N2 interface, for example, at least one of a gNB NGAP identity and an AMF NGAP identity.

It should be noted that step 23a is an optional implementation.

Step 23b: The SF network element triggers a process of establishing a sensing channel at a terminal device granularity between the SF network element and the RAN device.

It should be noted that for the process of establishing the sensing channel at the terminal device granularity (that is, a process of exchanging a sensing channel establishment request message and a sensing channel establishment response message), reference may be made to the description of the foregoing embodiment. Details are not described herein again.

Step 24a: The SF network element sends an NRSPa (NextGen Radio Sensing Protocol-a) message to the RAN device participating in sensing signal measurement, where the NRSPa message includes sensing service configuration information.

The sensing service configuration information may include at least one of the following: sensing service correlation identification information (Sensing service correlation ID), the description information of the sensing service (sensing service description), and the identification information of the sensing device.

It should be noted that the NRSPa protocol between the RAN device and the SF network element is used only as an example for description herein. The SF network element may alternatively send the sensing service configuration information through other protocols to the RAN device participating in sensing signal measurement.

The sensing service correlation identification information is used to identify one sensing service, and the sensing service correlation identification information may be allocated by the SF network element.

The identification information of the sensing device is used to indicate the device participating in sensing signal measurement. The sensing device may include at least one of the following: the sensing terminal device and the sensing RAN device. The identification information of the sensing device may include at least one of the following: the identification information of the sensing RAN device and the identification information of the sensing terminal device.

The sensing service configuration information is policy and control information defined by the SF network element for the description information of the sensing service. The sensing service configuration information may include at least one of the following: configuration information of the sensing terminal device and configuration information of the sensing RAN device.

For example, the sensing service configuration information may specifically include at least one of the following: used sensing measurement quantities (for example, reference signal received power (Reference Signal Received Power, RSRP), reference signal received quality (Reference Signal Received Quality, RSRQ), a multipath angle-of-arrival, a multipath angle-of-departure, a multipath delay, and a Doppler frequency), a sensing resource, a configured QoS configuration of the sensing service (a bandwidth configuration, a priority configuration, an accuracy configuration, and the like), a configured trigger condition of the sensing service, report information, and the like.

If the foregoing step 23b is performed, the identification information of the sensing terminal device may be information used to identify the terminal device on an Ny interface, such as an SF NyAP ID and/or a RAN NyAP ID.

If the foregoing step 23b is not performed, the identification information of the sensing terminal device may include the identification information for identifying the terminal device on the N2 interface. Optionally, the identification information of the sensing terminal device may further include an SF NyAP ID, and the SF NyAP ID is used to identify the terminal device on the Ny interface. The SF network element may allocate an SF NyAP ID to each terminal device, and the SF NyAP ID uniquely identifies one terminal device in the SF network element. The RAN device may determine the terminal device based on the identification information for identifying the terminal device on the N2 interface. Optionally, the RAN device may allocate a RAN NyAP ID to the determined terminal device. The RAN NyAP ID uniquely identifies one terminal device in the RAN device and is used to identify the terminal device on the Ny interface.

Optionally, in this embodiment of this application, the RAN device may send the RAN NyAP ID and SF NyAP ID to the SF by using the foregoing response message. Alternatively, the RAN device may send the RAN NyAP ID and SF NyAP IDto the SF when performing the following step 26a. The SF NyAP ID and the RAN NyAP ID may be the same or different. When the SF NyAP ID and the RAN NyAP ID are the same, only one of the two may appear in the response message. The identifier used by the RAN device to identify the terminal device on the N2 interface may be the same as or different from the SF NyAP ID.

Step 24b: The RAN device sends sensing measurement configuration information to the sensing terminal device participating in sensing signal measurement.

Optionally, in this embodiment of this application, the sensing RAN device sends radio resource management (Radio Resource Management, RRM) configuration information to the sensing terminal device to control the sensing terminal device to measure some measurement quantities (such as channel state information (Channel State Information, CSI), and a synchronization signal block (Synchronization Signal Block, SSB)).

The sensing measurement configuration information may be the foregoing sensing service configuration information, or the configuration information of the sensing terminal device, or information determined based on the sensing service configuration information.

Optionally, in this embodiment of this application, in a case that the identification information of the sensing device in the foregoing step 24a includes the identification information of the sensing terminal device, the foregoing step 24b is performed.

Step 25: The sensing device performs sensing measurement based on sensing service related information to obtain sensing measurement data.

In an implementation, the sensing device includes the RAN device. In this case the foregoing step 24b may not be performed. The RAN device sends and receives a sensing signal by itself, or the RAN device receives an uplink sensing signal sent by the terminal device and measures the sensing signal to obtain corresponding sensing measurement data.

In another implementation, the sensing device includes the sensing terminal device. In this case, the sensing terminal device sends and receives a sensing signal by itself, or receives a downlink sensing signal sent by the RAN device and measures the sensing signal to obtain corresponding sensing measurement data.

Step 26a: The sensing terminal device sends sensing measurement data (that is, a sensing measurement result) to the RAN device.

Optionally, in this embodiment of this application, the sensing terminal device may send the sensing measurement data to the RAN device by using a radio resource control (Radio Resource Control, RRC) message. For example, the sensing measurement data includes sensing measurement data of the sensing terminal device.

Optionally, in this embodiment of this application, the sensing measurement data of the sensing terminal device may include the sensing service correlation identification information and the identification information of the sensing terminal device.

Step 26b: The RAN device sends an NRSPa message to the SF network element, where the NRSPa message includes sensing measurement data (that is, a sensing measurement report).

In an implementation, the sensing device includes the RAN device. In this case, the foregoing step 26a may not be performed, but the foregoing step 26b may be performed. The sensing measurement data in step 26b includes only sensing measurement data of the RAN device, where the sensing measurement data of the RAN device may include the identification information of the sensing RAN device, and may further include the sensing service correlation identification information.

In another implementation, the sensing device includes the sensing terminal device. In this case, both step 26a and step 26b are performed. The sensing measurement data in step 26b may include the sensing measurement data received by the RAN device in step 26a. Optionally, the sensing measurement data in step 26b may further include a RAN NyAP ID and an SF NyAP ID.

In another implementation, the sensing device includes the sensing terminal device and the RAN device. In this case, both step 26a and step 26b are performed. The sensing measurement data in step 26b includes the sensing measurement data received by the RAN device in step 26a and sensing measurement data of the RAN device. In this scenario, step 26b may alternatively be performed in two steps, that is, sending the sensing measurement data of the sensing terminal device and the sensing measurement data of the RAN device to the SF network element separately.

Step 27: The SF network element obtains a sensing service analysis result based on the sensing measurement data.

The SF network element may calculate and analyze the sensing measurement data based on a preconfigured algorithm corresponding to the sensing service type, thereby obtaining the sensing service analysis result. For example, the sensing service analysis result is respiratory health status information of a user (whether the user is abnormal, an abnormal degree, and the like), or surrounding traffic hazard information (whether a pedestrian suddenly appears, a probability of appearance, and time).

Optionally, in this embodiment of this application, the foregoing algorithm may be an AI-based intelligent algorithm, or come from an external intelligent entity, or come from AI model training.

Step 28: The SF network element sends the sensing measurement data and/or the sensing service analysis result to the AF network element.

### Embodiment 2

Applicable architecture: An SF network element is deployed in a network. An Nx interface is between the SF network element and an AMF network element. A point-to-point interface (such as an Ny interface) is disposed between the SF network element and a RAN device. The Nx interface carries sensing task related control signaling. The Ny interface carries transmission of sensing measurement data.

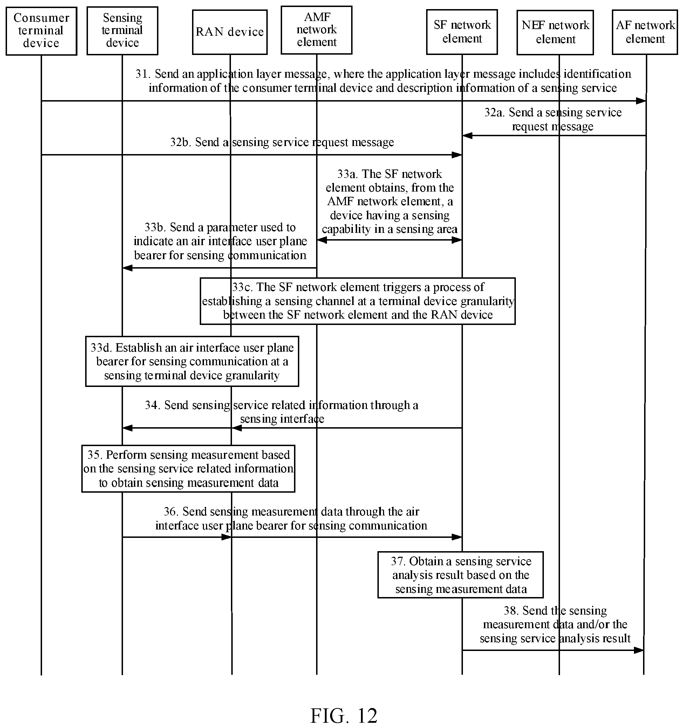

With reference to FIG. 1B, as shown in FIG. 12, this embodiment of this application provides a sensing channel establishment method.

Step 31: A consumer terminal device sends an application layer message to an AF network element, where the application layer message includes identification information of the consumer terminal device and description information of a sensing service.

It should be noted that, for the related description of step 31, reference may be made to the description in the foregoing step 21. Details are not described herein again.

Step 32a: The AF network element sends a sensing service request message to an SF network element.

It should be noted that, for the related description of step 32a, reference may be made to the description in the foregoing step 22a. Details are not described herein again.

Step 32b: The consumer terminal device sends a sensing service request message to the SF network element.

It may be understood that the consumer terminal device may also directly send the sensing service request message to the SF network element.

Optionally, in this embodiment of this application, the consumer terminal device may send the sensing service request message to the SF network element by using a protocol data unit (Protocol Data Unit, PDU) session. Alternatively, the consumer terminal device may send the sensing service request message to the SF network element through an AMF network element.

Step 33a: The SF network element obtains, from the AMF network element, a device having a sensing capability in a sensing area.

It should be noted that, for the related description of step 33a, reference may be made to the description in the foregoing step 23a. Details are not described herein again.

Step 33b: The AMF network element sends, to a sensing terminal device in the sensing area, a parameter used to indicate an air interface user plane bearer for sensing communication.

The parameter used to indicate the air interface user plane bearer for sensing communication includes at least one of the following: single network slice selection assistance information (Single Network Slice Selection Assistance Information, S-NSSAI), a data network name (Data Network Name, DNN), an access type (access type), and the like.

For example, the AMF network element sends an updated user equipment route selection policy (UE Route Selection Policy, URSP) to the sensing terminal device.

The URSP includes the parameter used to indicate the air interface user plane bearer for sensing communication.

Step 33c: The SF network element triggers a process of establishing a sensing channel at a terminal device granularity between the SF network element and a RAN device.

It should be noted that for the process of establishing the sensing channel at the terminal device granularity (that is, a process of exchanging a sensing channel establishment request message and a sensing channel establishment response message), reference may be made to the description of the foregoing embodiment. Details are not described herein again.

Step 33d: Establish an air interface user plane bearer for sensing communication at a sensing terminal device granularity.

The air interface user plane bearer is used to report a sensing measurement result. The sensing terminal device and/or the RAN device establish/establishes an air interface user plane bearer for sensing communication.

Optionally, in this embodiment of this application, the sensing terminal device may establish an air interface user plane bearer by using a configured parameter of the air interface user plane bearer for sensing communication, or establish an air interface user plane bearer by using a parameter that is of the air interface user plane bearer for sensing communication and that is obtained in a registration procedure.

For example, the sensing terminal device may send an RRC message to the RAN device to request to establish an air interface user plane bearer for sensing communication. The RRC message carries the parameter of the air interface user plane bearer for sensing communication, for example, at least one of the DNN and the S-NSSAI. Optionally, the RRC message further includes identification information of the SF network element. The RAN device may obtain a corresponding QoS parameter based on the parameter of the air interface user plane bearer for sensing communication, and establish an air interface user plane bearer that satisfies the QoS parameter for the sensing terminal device. The RAN device may associate the user plane bearer with a sensing channel (that is, a channel between the RAN device and the SF network element).

For another example, the RAN device requests to establish an air interface user plane bearer for sensing communication, and establishment of the sensing channel at the terminal device granularity may trigger the RAN device to request establishment of the air interface user plane bearer.

Optionally, in this embodiment of this application, before the foregoing step 33d, the sensing terminal device may register with the AMF network element and obtain the parameter of the air interface user plane bearer for sensing communication from the AMF network element. Optionally, the identification information of the SF network element may also be obtained. For example, the sensing terminal device receives a registration accept message from the AMF network element. The registration accept message includes a parameter for establishing the air interface user plane bearer for sensing communication, and optionally further includes the identification information of the SF network element.

Optionally, in this embodiment of this application, the parameter of the air interface user plane bearer for sensing communication or the identification information of the SF network element may be included in the URSP. The identification information of the SF network element may include at least one of the following: a fully qualified domain name (Fully Qualified Domain Name, FQDN) of the SF network element, an IP address of the SF, and the identification information of the SF network element.

Step 34: The SF network element sends sensing service related information to the sensing terminal device through a sensing interface.

The sensing service related information includes at least one of the following: sensing service correlation identification information, the description information of the sensing service, sensing service configuration information, and an identity of a sensing device. For various concepts, refer to the description of the foregoing embodiment.

Optionally, in this embodiment of this application, the SF network element sends an Ny message to the RAN device through an Ny interface, where the Ny message includes the sensing service related information and identification information of the sensing terminal device. The RAN device sends the sensing service configuration information to the sensing terminal device through the air interface user plane bearer for sensing communication of the sensing terminal device.

Optionally, in this embodiment of this application, the SF network element sends an Ny message to the RAN device through the Ny interface, where the Ny message includes configuration information of a sensing RAN device, the identification information of the sensing terminal device, and the sensing service related information. The RAN device sends the sensing service related information to the sensing terminal device.

If the foregoing step 33c is performed, the identification information of the sensing terminal device may include identification information for identifying the terminal device on the Ny interface, such as an SF NyAP ID and/or a RAN NyAP ID; or the identification information of the sensing terminal device may include endpoint information of a sensing channel established for the sensing terminal device.

If the foregoing step 33c is not performed, the identification information of the sensing terminal device may include identification information for identifying the terminal device on an N2 interface. Optionally, the identification information of the sensing terminal device may further include an SF NyAP ID, and the SF NyAP ID is used to identify the terminal device on the Ny interface. The SF network element may allocate an SF NyAP ID to each terminal device, and the SF NyAP ID uniquely identifies one terminal device in the SF network element. The RAN device may determine the terminal device based on the identification information for identifying the terminal device on the N2 interface. Optionally, the RAN device may allocate a RAN NyAP ID to the determined terminal device. The RAN NyAP ID uniquely identifies one terminal device in the RAN device and is used to identify the terminal device on the Ny interface.

Optionally, in this embodiment of this application, the RAN device may send the RAN NyAP ID and SF NyAP IDto the SF by using the foregoing response message. Alternatively, the RAN device may send the RAN NyAP ID and SF NyAP IDto the SF network element when transmitting a sensing measurement result of the sensing terminal device to the SF network element. The SF NyAP ID and the RAN NyAP ID may be the same or different. When the SF NyAP ID and the RAN NyAP ID are the same, only one of the two appears during sending. The identifier used by the RAN device to identify the terminal device on the N2 interface may be the same as or different from the SF NyAP ID.

Step 35: The sensing device performs sensing measurement based on the sensing service related information to obtain sensing measurement data.

It should be noted that, for the related description of step 35, reference may be made to the description in the foregoing step 25. Details are not described herein again.

Step 36: The sensing terminal device sends sensing measurement data to the SF network element through the air interface user plane bearer for sensing communication.

The sensing measurement data includes sensing measurement data of the sensing terminal device, and the sensing measurement data of the sensing terminal device may include the sensing service correlation identification information.

Optionally, in this embodiment of this application, the sensing terminal device sends the sensing measurement data of the sensing terminal device to the RAN device, and the RAN device sends the sensing measurement data of the sensing terminal device and the identification information of the sensing terminal device to the SF network element through the sensing channel. Optionally, the RAN device may further send sensing measurement data of the RAN device to the SF network element.

Step 37: The SF network element obtains a sensing service analysis result based on the sensing measurement data.

Step 38: The SF network element sends the sensing measurement data and/or the sensing service analysis result to the AF network element.

### Embodiment 3

Applicable architecture: An SF network element is deployed in a network. A point-to-point interface (such as an Ny interface) is disposed between the SF network element and a RAN device. The Ny interface is divided into a control plane and a user plane. The Ny control plane carries sensing task related control signaling, and the Ny user plane carries transmission of sensing measurement data.

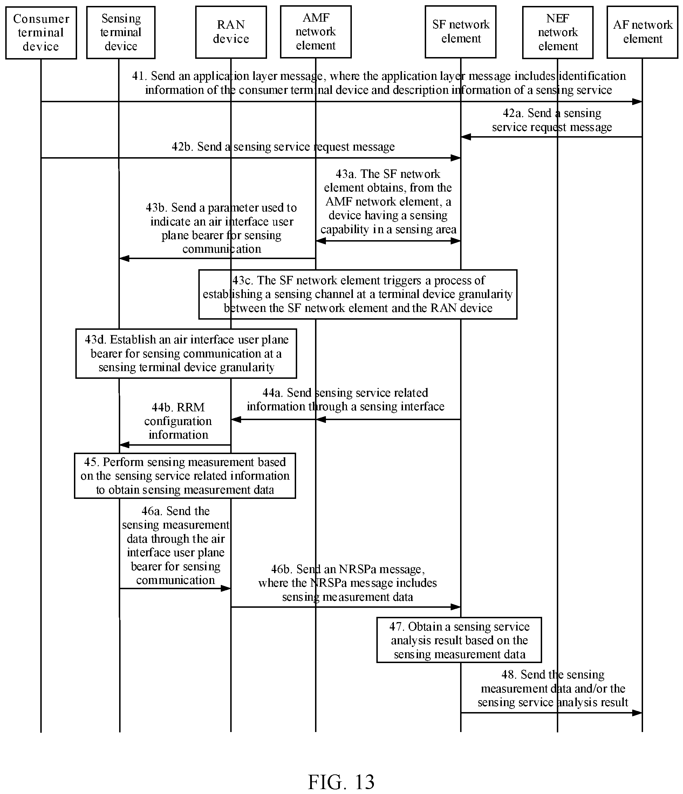

With reference to FIG. 1C, as shown in FIG. 13, this embodiment of this application provides a sensing channel establishment method.

Step 41: A consumer terminal device sends an application layer message to an AF network element, where the application layer message includes identification information of the consumer terminal device and description information of a sensing service.

It should be noted that, for the related description of step 41, reference may be made to the description in the foregoing step 21. Details are not described herein again.

Step 42a: The AF network element sends a sensing service request message to an SF network element.

It should be noted that, for the related description of step 42a, reference may be made to the description in the foregoing step 22a. Details are not described herein again.

Step 42b: The consumer terminal device sends a sensing service request message to the SF network element.

It should be noted that, for the related description of step 42b, reference may be made to the description in the foregoing step 32b. Details are not described herein again.

Step 43a: The SF network element obtains, from an AMF network element, a device having a sensing capability in a sensing area.

It should be noted that, for the related description of step 43a, reference may be made to the description in the foregoing step 23a. Details are not described herein again.

Step 43b: The AMF network element sends, to a sensing terminal device in the sensing area, a parameter used to indicate an air interface user plane bearer for sensing communication.

It should be noted that, for step 43b, reference may be made to the description of step 33b. Details are not described herein again.

Step 43c: The SF network element triggers a process of establishing a sensing channel at a terminal device granularity between the SF network element and a RAN device.

It should be noted that, for step 43c, reference may be made to the description of step 33c. Details are not described herein again.

Step 43d: Establish an air interface user plane bearer for sensing communication at a sensing terminal device granularity.

It should be noted that, for the related description of step 43d, reference may be made to the description in the foregoing step 33d. Details are not described herein again.

Step 44: The SF network element sends sensing service related information to the sensing terminal device through a sensing interface.

Specifically, step 44 includes step 44a and step 44b.

Step 44a: The SF network element sends the sensing service related information to the RAN device through the sensing interface.

Step 44b: The RAN device sends RRM configuration information to the sensing terminal device.

The RRM configuration information includes the sensing service related information.

It should be noted that, for the related description of step 44, reference may be made to the description in the foregoing step 34. Details are not described herein again.

Step 45: The sensing device performs sensing measurement based on the sensing service related information to obtain sensing measurement data.

It should be noted that, for the related description of step 45, reference may be made to the description in the foregoing step 25. Details are not described herein again.

Step 46: The sensing terminal device sends sensing measurement data to the SF network element through the air interface user plane bearer for sensing communication.

Specifically, step 44 includes step 46a and step 46b.

Step 46a: The sensing terminal device sends the sensing measurement data to the RAN device through the air interface user plane bearer for sensing communication.

Step 46b: The RAN device sends an NRSPa message to the SF network element, where the NRSPa message includes sensing measurement data.

It should be noted that, for the related description of step 46, reference may be made to the description in the foregoing step 36. Details are not described herein again.

Step 47: The SF network element obtains a sensing service analysis result based on the sensing measurement data.

Step 48: The SF network element sends the sensing measurement data and/or the sensing service analysis result to the AF network element.

It should be noted that the sensing channel establishment method provided in the embodiments of this application may be performed by a sensing channel establishment apparatus, or a control module configured to perform the sensing channel establishment method in the sensing channel establishment apparatus.

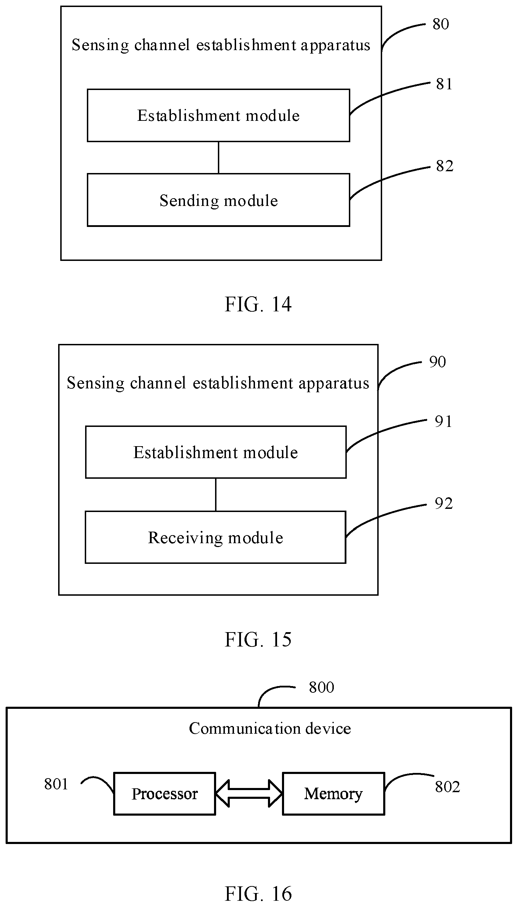

FIG. 14 is a schematic diagram of a possible structure of a sensing channel establishment apparatus according to an embodiment of this application. As shown in FIG. 14, the sensing channel establishment apparatus 80 may include an establishment module 81 and a sending module 82.

The establishment module 81 is configured to establish a sensing channel with an access network device. The sending module 82 is configured to send target sensing service configuration information to a sensing device through the sensing channel established by the establishment module 81, where the target sensing service configuration information is used to measure a sensing signal.

In a possible implementation, the sensing device includes a sensing terminal device. The establishment module 81 is specifically configured to: send a sensing channel establishment request message to the access network device, where the sensing channel establishment request message includes identification information of the sensing terminal device on a first interface, and the first interface is an interface between the access network device and a mobility management network element; and receive a sensing channel establishment response message from the access network device, where the sensing channel establishment response message includes target identification information, the target identification information includes identification information for identifying a terminal device on a sensing interface, and the sensing interface is an interface between the access network device and a sensing network element.

In a possible implementation, the establishment module 81 is specifically configured to send the sensing channel establishment request message to the access network device through the mobility management network element, and receive the sensing channel establishment response message from the access network device through the mobility management network element.

In a possible implementation, the sensing channel establishment apparatus 80 provided in this embodiment of this application further includes an obtaining module, where the obtaining module is configured to obtain the identification information of the sensing terminal device on the first interface from the mobility management network element before the establishment module 81 sends the sensing channel establishment request message to the access network device.

In a possible implementation, the sensing channel establishment request message further includes sensing channel endpoint identification information of the sensing network element; or the sensing channel establishment response message further includes sensing channel endpoint identification information of the access network device.

In a possible implementation, the target identification information further includes at least one of the following: the identification information of the sensing terminal device on the first interface, sensing channel application protocol identification information of the sensing network element, and sensing channel application protocol identification information of the access network device, where the sensing channel application protocol identification information of the sensing network element is used to uniquely identify the sensing terminal device in the sensing network element, and the sensing channel application protocol identification information of the access network device is used to uniquely identify the sensing terminal device in the access network device.

In a possible implementation, the sensing channel application protocol identification information of the sensing network element and the sensing channel application protocol identification information of the access network device are the same or different; and/or identification information for identifying the terminal device on the first interface by the access network device and the sensing channel application protocol identification information of the sensing network element are the same or different.

In a possible implementation, the sensing device includes a sensing terminal device. The sending module 82 is specifically configured to send the target sensing service configuration information to the access network device through the sensing channel, where the target sensing service configuration information includes target identification information, and the target identification information includes identification information for identifying a terminal device on a sensing interface.

In a possible implementation, data packet encapsulation of the target sensing service configuration information includes sensing channel endpoint identification information of the access network device.

In a possible implementation, the sensing channel establishment apparatus 80 provided in this embodiment of this application further includes a receiving module, where the receiving module is configured to receive a target sensing measurement report from the access network device after the sending module 82 sends the target sensing service configuration information to the sensing device through the sensing channel, where the target sensing measurement report includes at least one of the following: a sensing measurement report of the access network device and a sensing measurement report of the sensing terminal device, where the sensing measurement report of the sensing terminal device includes the target identification information, and the target identification information includes the identification information for identifying the terminal device on the sensing interface.

In a possible implementation, data packet encapsulation of the target sensing measurement report includes sensing channel endpoint identification information of the sensing network element.

In a possible implementation, the sensing channel establishment apparatus 80 provided in this embodiment of this application further includes an obtaining module and a determining module, where the obtaining module is configured to obtain sensing service information before the establishment module 81 establishes the sensing channel with the access network device; and the determining module is configured to determine the sensing device based on the sensing service information obtained by the obtaining module, where the sensing device is a device having a sensing capability in a sensing area.

In a possible implementation, the determining module is specifically configured to: determine the sensing area based on the sensing service information; send first indication information to a mobility management network element, where the first indication information is used to indicate the sensing area; receive first identification information from the mobility management network element, where the first identification information is used to indicate the terminal device or the access network device located in the sensing area; and determine the sensing device based on the first identification information.

In a possible implementation, the sensing service information includes at least one of the following: description information of a sensing service, a service object identifier of the sensing service, and service range information of the sensing service, where the description information of the sensing service includes at least one of the following: a sensing service type, a sensing service purpose, a sensing service granularity, a sensing service time, sensing data reporting information, and a quality of service requirement of the sensing service; the service object identifier is used to indicate the terminal device that triggers the sensing service; and the service range information is used to indicate a range within which the service object of the sensing service performs the sensing service.

According to the sensing channel establishment apparatus provided in this embodiment of this application, the sensing network element can be deployed, and the sensing channel between the sensing network element and the access network device can be established, so that the sensing network element and the access network device can exchange information related to the sensing service (such as sensing service configuration information) through the sensing channel to implement execution of a sensing service procedure and processing of the sensing service (such as measuring the sensing signal), thereby implementing a sensing function in integrated communication and sensing.

The sensing channel establishment apparatus in this embodiment of this application may be an apparatus, or an apparatus or a sensing network element with an operating system, or may be a component, an integrated circuit, a chip, or the like in a sensing network element.

The sensing channel establishment apparatus provided in this embodiment of this application can implement each process implemented by the sensing network element in the foregoing method embodiment, with the same technical effect achieved. To avoid repetition, details are not described herein again.

FIG. 15 is a schematic diagram of a possible structure of a sensing channel establishment apparatus according to an embodiment of this application. As shown in FIG. 15, the sensing channel establishment apparatus 90 may include an establishment module 91 and a receiving module 92.

The establishment module 91 is configured to establish a sensing channel with a sensing network element. The receiving module 92 is configured to receive target sensing service configuration information from the sensing network element through the sensing channel established by the establishment module 91, where the target sensing service configuration information is used to measure a sensing signal.

In a possible implementation, the establishment module 91 is specifically configured to: receive a sensing channel establishment request message from the sensing network element, where the sensing channel establishment request message includes identification information of a sensing terminal device on a first interface, and the first interface is an interface between an access network device and a mobility management network element; and send a sensing channel establishment response message to the sensing network element, where the sensing channel establishment response message includes target identification information, the target identification information includes identification information for identifying a terminal device on a sensing interface, and the sensing interface is an interface between the access network device and the sensing network element.

In a possible implementation, the establishment module 91 is specifically configured to receive the sensing channel establishment request message from the sensing network element through the mobility management network element, and send the sensing channel establishment response message to the sensing network element through the mobility management network element.

In a possible implementation, the sensing channel establishment apparatus 90 provided in this embodiment of this application further includes a determining module, where the determining module is configured to determine the sensing terminal device based on the identification information of the sensing terminal device on the first interface after the establishment module 91 receives the sensing channel establishment request message from the sensing network element.

In a possible implementation, the sensing channel establishment apparatus 90 provided in this embodiment of this application further includes a sending module, where the sending module is configured to send a target sensing measurement report to the sensing network element after the receiving module 92 receives the target sensing service configuration information from the sensing network element through the sensing channel, where the target sensing measurement report includes at least one of the following: a sensing measurement report of an access network device and a sensing measurement report of a sensing terminal device, where the sensing measurement report of the sensing terminal device includes target identification information, and the target identification information includes identification information for identifying a terminal device on a sensing interface.

In a possible implementation, the sensing channel establishment apparatus 90 provided in this embodiment of this application further includes a sending module, where the sending module is configured to send first sensing service configuration information to a sensing terminal device after the receiving module 92 receives the target sensing service configuration information from the sensing network element through the sensing channel, where the first sensing service configuration information and the target sensing service configuration information are the same or different.

According to the sensing channel establishment apparatus provided in this embodiment of this application, the sensing network element can be deployed, and the sensing channel between the sensing network element and the access network device can be established, so that the sensing network element and the access network device can exchange information related to the sensing service (such as sensing service configuration information) through the sensing channel to implement execution of a sensing service procedure and processing of the sensing service (such as measuring the sensing signal), thereby implementing a sensing function in integrated communication and sensing.

The sensing channel establishment apparatus in this embodiment of this application may be an apparatus, or an apparatus or an access network device with an operating system, or may be a component, an integrated circuit, or a chip in an access network device.

The sensing channel establishment apparatus provided in this embodiment of this application can implement each process implemented by the access network device in the foregoing method embodiment, with the same technical effect achieved. To avoid repetition, details are not described herein again.

Optionally, as shown in FIG. 16, an embodiment of this application further provides a communication device 800, including a processor 801, a memory 802, and a program or instructions stored in the memory 802 and capable of running on the processor 801. For example, when the communication device 800 is a sensing network element, and the program or instructions are executed by the processor 801, each process performed by the sensing network element in the foregoing method embodiment is implemented, with the same technical effect achieved. When the communication device 800 is an access network device, and the program or instructions are executed by the processor 801, each process performed by the access network device in the foregoing method embodiment is implemented, with the same technical effect achieved. To avoid repetition, details are not described herein again.

An embodiment of this application further provides a network element. The network element includes a processor and a communication interface. The processor is configured to establish a sensing channel with an access network device. The communication interface is configured to send target sensing service configuration information to a sensing device through the sensing channel, where the target sensing service configuration information is used to measure a sensing signal. The network element embodiment corresponds to the foregoing method embodiment of the sensing network element, and each implementation process and implementation of the foregoing method embodiment can be applied to the network element embodiment, with the same technical effect achieved.

An embodiment of this application further provides an access network device. The access network device includes a processor and a communication interface. The processor is configured to establish a sensing channel with a sensing network element. The communication interface is configured to receive target sensing service configuration information from the sensing network element through the sensing channel, where the target sensing service configuration information is used to measure a sensing signal. The access network device embodiment corresponds to the foregoing embodiment of the access network device, and each implementation process and implementation of the foregoing method embodiment can be applied to the access network device embodiment, with the same technical effect achieved.

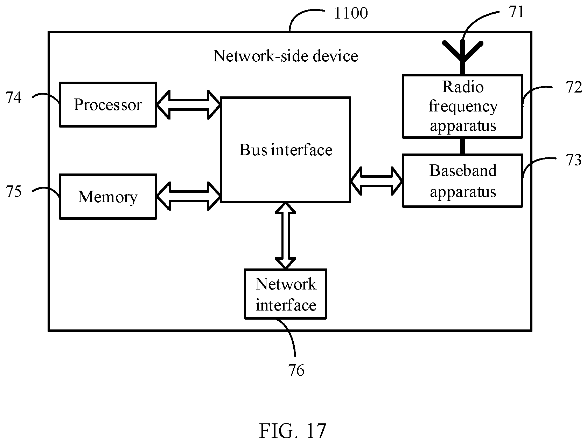

Specifically, an embodiment of this application further provides a network-side device. The network-side device is a sensing network element or an access network device. As shown in FIG. 17, the network-side device 1100 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information out by using the antenna 71.

The frequency band processing apparatus may be located in the baseband apparatus 73. The method performed by the network-side device in the foregoing embodiment may be implemented in the baseband apparatus 73, and the baseband apparatus 73 includes a processor 74 and a memory 75.

The baseband apparatus 73 may include, for example, at least one baseband unit, where a plurality of chips are disposed on the baseband unit. As shown in FIG. 17, one of the chips is, for example, the processor 74, connected to the memory 75, to invoke a program in the memory 75 to perform the operation performed by the sensing network element or the access network device shown in the foregoing method embodiment.

The baseband apparatus 73 may further include a network interface 76, configured to exchange information with the radio frequency apparatus 72, where the interface is, for example, a common public radio interface (Common Public Radio Interface, CPRI).

It should be noted that when the network-side device is a sensing network element, the antenna 71, the radio frequency apparatus 72, and the baseband apparatus 73 may be optional.

An embodiment of this application provides a network-side device. The network-side device may be a sensing network element. A sensing channel between the sensing network element and an access network device is established, so that the sensing network element and the access network device can exchange information related to a sensing service (such as sensing service configuration information) through the sensing channel to implement execution of a sensing service procedure and processing of the sensing service (such as measuring a sensing signal), thereby implementing a sensing function in integrated communication and sensing.

An embodiment of this application provides a network-side device. The network-side device may be an access network device. A sensing channel between the access network device and a sensing network element is established, so that the access network device and the sensing network element can exchange information related to a sensing service (such as sensing service configuration information) through the sensing channel to implement execution of a sensing service procedure and processing of the sensing service (such as measuring a sensing signal), thereby implementing a sensing function in integrated communication and sensing.

The network-side device provided in this embodiment of this application can implement each process implemented by the sensing network element and the access network device in the foregoing method embodiment, with the same technical effect achieved. To avoid repetition, details are not described herein again.

Specifically, the network-side device in this embodiment of this application further includes a program or instructions stored in the memory 75 and capable of running on the processor 74. When the processor 74 invokes the program or instructions in the memory 75, the method performed by each module or unit is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the sensing channel establishment method is implemented, with the same technical effect achieved. To avoid repetition, details are not described herein again.

The processor is a processor in the network element or the access network device described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the sensing channel establishment method, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A sensing channel establishment method, comprising:
establishing, by a sensing network element, a sensing channel with an access network device; and
sending, by the sensing network element, target sensing service configuration information to a sensing device through the sensing channel, wherein the target sensing service configuration information is used to measure a sensing signal.

2. The method according to claim 1, wherein the sensing device comprises a sensing terminal device; and
the establishing, by a sensing network element, a sensing channel with an access network device comprises:
sending, by the sensing network element, a sensing channel establishment request message to the access network device, wherein the sensing channel establishment request message comprises identification information of the sensing terminal device on a first interface, and the first interface is an interface between the access network device and a mobility management network element; and
receiving, by the sensing network element, a sensing channel establishment response message from the access network device, wherein the sensing channel establishment response message comprises target identification information, the target identification information comprises identification information for identifying a terminal device on a sensing interface, and the sensing interface is an interface between the access network device and the sensing network element.

3. The method according to claim 2, wherein the sending, by the sensing network element, a sensing channel establishment request message to the access network device comprises:
sending, by the sensing network element, the sensing channel establishment request message to the access network device through the mobility management network element; and
the receiving, by the sensing network element, a sensing channel establishment response message from the access network device comprises:
receiving, by the sensing network element, the sensing channel establishment response message from the access network device through the mobility management network element.

4. The method according to claim 2 or 3, wherein before the sending, by the sensing network element, a sensing channel establishment request message to the access network device, the method further comprises:
obtaining, by the sensing network element, the identification information of the sensing terminal device on the first interface from the mobility management network element.

5. The method according to claim 2, wherein the sensing channel establishment request message further comprises sensing channel endpoint identification information of the sensing network element; or
the sensing channel establishment response message further comprises sensing channel endpoint identification information of the access network device.

6. The method according to claim 2, wherein the target identification information further comprises at least one of the following: the identification information of the sensing terminal device on the first interface, sensing channel application protocol identification information of the sensing network element, and sensing channel application protocol identification information of the access network device, wherein
the sensing channel application protocol identification information of the sensing network element is used to uniquely identify the sensing terminal device in the sensing network element, and the sensing channel application protocol identification information of the access network device is used to uniquely identify the sensing terminal device in the access network device.

7. The method according to claim 6, wherein the sensing channel application protocol identification information of the sensing network element and the sensing channel application protocol identification information of the access network device are the same or different;
and/or
identification information for identifying the terminal device on the first interface by the access network device and the sensing channel application protocol identification information of the sensing network element are the same or different.

8. The method according to claim 1, wherein the sensing device comprises a sensing terminal device; and
the sending, by the sensing network element, target sensing service configuration information to a sensing device through the sensing channel comprises:
sending, by the sensing network element, the target sensing service configuration information to the access network device through the sensing channel, wherein the target sensing service configuration information comprises target identification information, and the target identification information comprises identification information for identifying a terminal device on a sensing interface.

9. The method according to claim 8, wherein data packet encapsulation of the target sensing service configuration information comprises sensing channel endpoint identification information of the access network device.

10. The method according to claim 1 or 8, wherein after the sending, by the sensing network element, target sensing service configuration information to a sensing device through the sensing channel, the method further comprises:
receiving, by the sensing network element, a target sensing measurement report from the access network device, wherein the target sensing measurement report comprises at least one of the following: a sensing measurement report of the access network device and a sensing measurement report of the sensing terminal device, wherein the sensing measurement report of the sensing terminal device comprises target identification information, and the target identification information comprises identification information for identifying a terminal device on a sensing interface.

11. The method according to claim 10, wherein data packet encapsulation of the target sensing measurement report comprises sensing channel endpoint identification information of the sensing network element.

12. The method according to claim 1, wherein before the establishing, by a sensing network element, a sensing channel with an access network device, the method further comprises:
obtaining, by the sensing network element, sensing service information; and
determining the sensing device based on the sensing service information, wherein the sensing device is a device having a sensing capability in a sensing area.

13. The method according to claim 12, wherein the determining the sensing device based on the sensing service information comprises:
determining, by the sensing network element, the sensing area based on the sensing service information;
sending, by the sensing network element, first indication information to a mobility management network element, wherein the first indication information is used to indicate the sensing area;
receiving, by the sensing network element, first identification information from the mobility management network element, wherein the first identification information is used to indicate a terminal device or a access network device located in the sensing area; and
determining, by the sensing network element, the sensing device based on the first identification information.

14. The method according to claim 12 or 13, wherein the sensing service information comprises at least one of the following: description information of a sensing service, a service object identifier of the sensing service, and service range information of the sensing service, wherein
the description information of the sensing service comprises at least one of the following: a sensing service type, a sensing service purpose, a sensing service granularity, a sensing service time, sensing data reporting information, and a quality of service requirement of the sensing service; the service object identifier is used to indicate the terminal device that triggers the sensing service; and the service range information is used to indicate a range within which the service object of the sensing service performs the sensing service.

15. A sensing channel establishment method, comprising:
establishing, by an access network device, a sensing channel with a sensing network element; and
receiving, by the access network device, target sensing service configuration information from the sensing network element through the sensing channel, wherein the target sensing service configuration information is used to measure a sensing signal.

16. The method according to claim 15, wherein the establishing, by an access network device, a sensing channel with a sensing network element comprises:
receiving, by the access network device, a sensing channel establishment request message from the sensing network element, wherein the sensing channel establishment request message comprises identification information of a sensing terminal device on a first interface, and the first interface is an interface between the access network device and a mobility management network element; and
sending, by the access network device, a sensing channel establishment response message to the sensing network element, wherein the sensing channel establishment response message comprises target identification information, the target identification information comprises identification information for identifying a terminal device on a sensing interface, and the sensing interface is an interface between the access network device and the sensing network element.

17. The method according to claim 16, wherein the receiving, by the access network device, a sensing channel establishment request message from the sensing network element comprises:
receiving, by the access network device, the sensing channel establishment request message from the sensing network element through the mobility management network element; and
the sending, by the access network device, a sensing channel establishment response message to the sensing network element comprises:
sending, by the access network device, the sensing channel establishment response message to the sensing network element through the mobility management network element.

18. The method according to claim 16 or 17, wherein after the receiving, by the access network device, a sensing channel establishment request message from the sensing network element, the method further comprises:
determining, by the access network device, the sensing terminal device based on the identification information of the sensing terminal device on the first interface.

19. The method according to claim 15, wherein after the receiving, by the access network device, target sensing service configuration information from the sensing network element through the sensing channel, the method further comprises:
sending, by the access network device, a target sensing measurement report to the sensing network element, wherein the target sensing measurement report comprises at least one of the following: a sensing measurement report of the access network device and a sensing measurement report of a sensing terminal device, wherein the sensing measurement report of the sensing terminal device comprises target identification information, and the target identification information comprises identification information for identifying a terminal device on a sensing interface.

20. The method according to claim 15, wherein after the receiving, by the access network device, target sensing service configuration information from the sensing network element through the sensing channel, the method further comprises:
sending, by the access network device, first sensing service configuration information to a sensing terminal device, wherein the first sensing service configuration information and the target sensing service configuration information are the same or different.

21. A sensing channel establishment apparatus, wherein the sensing channel establishment apparatus comprises an establishment module and a sending module, wherein
the establishment module is configured to establish a sensing channel with an access network device; and
the sending module is configured to send target sensing service configuration information to a sensing device through the sensing channel established by the establishment module, wherein the target sensing service configuration information is used to measure a sensing signal.

22. The apparatus according to claim 21, wherein the sensing device comprises a sensing terminal device; and
the establishment module is specifically configured to: send a sensing channel establishment request message to the access network device, wherein the sensing channel establishment request message comprises identification information of the sensing terminal device on a first interface, and the first interface is an interface between the access network device and a mobility management network element; and receive a sensing channel establishment response message from the access network device, wherein the sensing channel establishment response message comprises target identification information, the target identification information comprises identification information for identifying a terminal device on a sensing interface, and the sensing interface is an interface between the access network device and a sensing network element.

23. The apparatus according to claim 22, wherein the establishment module is specifically configured to send the sensing channel establishment request message to the access network device through the mobility management network element, and receive the sensing channel establishment response message from the access network device through the mobility management network element.

24. The apparatus according to claim 22 or 23, wherein the sensing channel establishment apparatus further comprises an obtaining module, wherein
the obtaining module is configured to obtain the identification information of the sensing terminal device on the first interface from the mobility management network element before the establishment module sends the sensing channel establishment request message to the access network device.

25. The apparatus according to claim 21, wherein the sensing device comprises a sensing terminal device; and
the sending module is specifically configured to send the target sensing service configuration information to the access network device through the sensing channel, wherein the target sensing service configuration information comprises target identification information, and the target identification information comprises identification information for identifying a terminal device on a sensing interface.

26. The apparatus according to claim 21 or 25, wherein the sensing channel establishment apparatus further comprises a receiving module, wherein
the receiving module is configured to receive a target sensing measurement report from the access network device after the sending module sends the target sensing service configuration information to the sensing device through the sensing channel, wherein the target sensing measurement report comprises at least one of the following: a sensing measurement report of the access network device and a sensing measurement report of the sensing terminal device, wherein the sensing measurement report of the sensing terminal device comprises target identification information, and the target identification information comprises identification information for identifying a terminal device on a sensing interface.

27. The apparatus according to claim 21, wherein the sensing channel establishment apparatus further comprises an obtaining module and a determining module, wherein
the obtaining module is configured to obtain sensing service information before the establishment module establishes the sensing channel with the access network device; and
the determining module is configured to determine the sensing device based on the sensing service information obtained by the obtaining module, wherein the sensing device is a device having a sensing capability in a sensing area.

28. The apparatus according to claim 27, wherein the determining module is specifically configured to: determine the sensing area based on the sensing service information; send first indication information to a mobility management network element, wherein the first indication information is used to indicate the sensing area; receive first identification information from the mobility management network element, wherein the first identification information is used to indicate a terminal device or a access network device located in the sensing area; and determine the sensing device based on the first identification information.

29. A sensing channel establishment apparatus, wherein the sensing channel establishment apparatus comprises an establishment module and a receiving module, wherein
the establishment module is configured to establish a sensing channel with a sensing network element; and
the receiving module is configured to receive target sensing service configuration information from the sensing network element through the sensing channel established by the establishment module, wherein the target sensing service configuration information is used to measure a sensing signal.

30. The apparatus according to claim 29, wherein the establishment module is specifically configured to: receive a sensing channel establishment request message from the sensing network element, wherein the sensing channel establishment request message comprises identification information of a sensing terminal device on a first interface, and the first interface is an interface between an access network device and a mobility management network element; and send a sensing channel establishment response message to the sensing network element, wherein the sensing channel establishment response message comprises target identification information, the target identification information comprises identification information for identifying a terminal device on a sensing interface, and the sensing interface is an interface between the access network device and the sensing network element.

31. The apparatus according to claim 30, wherein the establishment module is specifically configured to receive the sensing channel establishment request message from the sensing network element through the mobility management network element, and send the sensing channel establishment response message to the sensing network element through the mobility management network element.

32. The apparatus according to claim 30 or 31, wherein the sensing channel establishment apparatus further comprises a determining module, wherein
the determining module is configured to determine the sensing terminal device based on the identification information of the sensing terminal device on the first interface after the establishment module receives the sensing channel establishment request message from the sensing network element.

33. The apparatus according to claim 29, wherein the sensing channel establishment apparatus further comprises a sending module, wherein
the sending module is configured to send a target sensing measurement report to the sensing network element after the receiving module receives the target sensing service configuration information from the sensing network element through the sensing channel, wherein the target sensing measurement report comprises at least one of the following: a sensing measurement report of an access network device and a sensing measurement report of a sensing terminal device, wherein the sensing measurement report of the sensing terminal device comprises target identification information, and the target identification information comprises identification information for identifying a terminal device on a sensing interface.

34. The apparatus according to claim 29, wherein the sensing channel establishment apparatus further comprises a sending module, wherein
the sending module is configured to send first sensing service configuration information to a sensing terminal device after the receiving module receives the target sensing service configuration information from the sensing network element through the sensing channel, wherein the first sensing service configuration information and the target sensing service configuration information are the same or different.

35. A network element, comprising a processor, a memory, and a program or instructions stored in the memory and capable of running on the processor, wherein when the program or instructions are executed by the processor, steps of the sensing channel establishment method according to any one of claims 1 to 14 are implemented.

36. An access network device, comprising a processor, a memory, and a program or instructions stored in the memory and capable of running on the processor, wherein when the program or instructions are executed by the processor, steps of the sensing channel establishment method according to any one of claims 15 to 20 are implemented.

37. A readable storage medium, wherein the readable storage medium stores a program or instructions, and when the program or instructions are executed by a processor, steps of the sensing channel establishment method according to any one of claims 1 to 14 are implemented, or steps of the sensing channel establishment method according to any one of claims 15 to 20 are implemented.

38. A communication system, wherein the communication system comprises the sensing channel establishment apparatus according to any one of claims 21 to 28 and the sensing channel establishment apparatus according to any one of claims 29 to 34; or
the communication system comprises the network element according to claim 35 and the access network device according to claim 36.
